# EUROPÄISCHE PATENTSCHRIFT

(11) **EP 3 301 275 B1**
(45) Veröffentlichungstag und Bekanntmachung des Hinweises auf die Patenterteilung: **24.04.2019**
(21) Anmeldenummer: 17188367.1
(22) Anmeldetag: 29.08.2017
(51) Int. Cl.: F02B 75/04, F16K 11/00, F16K 15/14

(54) **HYDRAULIKANORDNUNG MIT EINEM UMSCHALTVENTIL ZUM STEUERN EINES HYDRAULIKFLÜSSIGKEITSSTROMS EINES PLEUELS FÜR EINE BRENNKRAFTMASCHINE MIT VARIABLER VERDICHTUNG SOWIE PLEUEL**
HYDRAULIC ASSEMBLY COMPRISING A SWITCHING VALVE FOR CONTROLLING A HYDRAULIC FLUID STREAM OF A CONNECTING ROD FOR A COMBUSTION ENGINE WITH VARIABLE COMPRESSION AND CONNECTING ROD
SYSTÈME HYDRAULIQUE POURVU DE COUPLEUR INVERSEUR PERMETTANT LA COMMANDE D'UN COURANT LIQUIDE HYDRAULIQUE D'UNE BIELLE POUR UN MOTEUR À COMBUSTION INTERNE À CAPACITÉ VARIABLE AINSI QUE BIELLE

(30) Priorität: 30.09.2016 DE 102016118643; 06.06.2017 DE 102017112383; 23.06.2017 DE 102017113984
(43) Veröffentlichungstag der Anmeldung: 04.04.2018
(73) Patentinhaber: ECO Holding 1 GmbH, 97828 Marktheidenfeld (DE)
(72) Erfinder: Schulze, Dietmar, 35516 Münzenberg (DE); Mudra, Alexander, 97828 Marktheidenfeld (DE)

(56) Entgegenhaltungen:
- WO-A1-2016/058600
- WO-A1-2016/083592
- WO-A1-2016/127985
- WO-A2-2015/082722
- DE-A1-102012 020 999
- DE-A1-102012 112 434
- US-A1- 2015 152 794

## Beschreibung

### Technisches Gebiet

Die Erfindung betrifft ein Pleuel mit einer Hydraulikanordnung mit einem Umschaltventil zum Steuern eines Hydraulikflüssigkeitsstroms des Pleuels für eine Brennkraftmaschine mit variabler Verdichtung mit einer Exzenter-Verstelleinrichtung zur Verstellung einer effektiven Pleuelstangenlänge.

### Stand der Technik

Bei Brennkraftmaschinen wirkt sich ein hohes Verdichtungsverhältnis positiv auf den Wirkungsgrad der Brennkraftmaschine aus. Unter Verdichtungsverhältnis wird im Allgemeinen das Verhältnis des gesamten Zylinderraumes vor der Verdichtung zum verbliebenen Zylinderraum nach der Verdichtung verstanden. Bei Brennkraftmaschinen mit Fremdzündung, insbesondere Ottomotoren, die ein festes Verdichtungsverhältnis aufweisen, darf das Verdichtungsverhältnis jedoch nur so hoch gewählt werden, dass bei Volllastbetrieb ein sogenanntes "Klopfen" der Brennkraftmaschine vermieden wird. Jedoch könnte für den weitaus häufiger auftretenden Teillastbereich der Brennkraftmaschine, also bei geringer Zylinderfüllung, das Verdichtungsverhältnis mit höheren Werten gewählt werden, ohne dass ein "Klopfen" auftreten würde. Der wichtige Teillastbereich einer Brennkraftmaschine kann verbessert werden, wenn das Verdichtungsverhältnis variabel einstellbar ist. Zur Verstellung des Verdichtungsverhältnisses sind beispielsweise Systeme mit variabler Pleuelstangenlänge bekannt.

Ein Pleuel mit einer Hydraulikanordnung für eine Brennkraftmaschine mit variabler Verdichtung mit einer Exzenter-Verstelleinrichtung zur Verstellung einer effektiven Pleuelstangenlänge ist beispielsweise aus der DE 10 2012 020 999 A1 bekannt.

### Offenbarung der Erfindung

Eine Aufgabe der Erfindung ist es, ein verbessertes Pleuel mit einer Hydraulikanordnung für ein Pleuel für eine Brennkraftmaschine mit variabler Verdichtung mit einer Exzenter-Verstelleinrichtung zur Verstellung einer effektiven Pleuelstangenlänge zu schaffen, welche ein stabiles Betriebsverhalten aufweist.

Die vorgenannte Aufgabe wird gelöst mit den Merkmalen des unabhängigen Anspruchs.

Günstige Ausgestaltungen und Vorteile der Erfindung ergeben sich aus den weiteren Ansprüchen, der Beschreibung und der Zeichnung.

Es wird ein Pleuel mit einer Hydraulikanordnung mit einem Umschaltventil zum Steuern eines Hydraulikflüssigkeitsstroms eines Pleuels für eine Brennkraftmaschine mit variabler Verdichtung mit einer Exzenter-Verstelleinrichtung zur Verstellung einer effektiven Pleuelstangenlänge vorgeschlagen, wobei die Exzenter-Verstelleinrichtung wenigstens einen ersten Zylinder und einen zweiten
Zylinder als Hydraulikkammern aufweist und wobei sowohl jeweils ein Zulauf zum Zuführen von Hydraulikflüssigkeit in die Zylinder über eine Versorgungsleitung als auch jeweils ein Ablauf zum Abführen von Hydraulikflüssigkeit von den Zylindern vorgesehen sind. Das Umschaltventil weist einen beweglichen Kolben auf, welcher wahlweise in eine erste Schaltstellung oder eine zweite Schaltstellung verlagerbar ist, wobei in der ersten Schaltstellung der Ablauf des ersten Zylinders und in der zweiten Schaltstellung der Ablauf des zweiten Zylinders mit der Versorgungsleitung verbunden ist. Dabei ist den Zylindern jeweils ein Rückschlagventil zugeordnet, welches ein Zuführen von Hydraulikflüssigkeit in die Zylinder ermöglicht und ein Abführen von Hydraulikflüssigkeit von den Zylindern verhindert. Die Zylinder sind ferner derart verbunden, dass in der ersten Schaltstellung Hydraulikflüssigkeit aus dem ersten Zylinder in den zweiten Zylinder leitbar ist.

Zwischen der Versorgungsleitung und dem Zulauf des zweiten Zylinders ist eine Drosselstelle angeordnet, mittels welcher ein Druck vor dem Rückschlagventil des zweiten Zylinders derart entsteht, dass diese in der ersten Schaltstellung befüllt werden kann.

Durch diese Drosselstelle kann in der Stellung für niedrige Verdichtung ε_{low} der Anteil des Hydraulikflüssigkeitsstromes, der in Richtung Hydraulikversorgung abgezweigt wird, geleitet werden, so dass vorteilhaft zur Befüllung der MKS-Kammer der größere Anteil des Hydraulikflüssigkeitsstromes, der aus der GKS-Kammer abfließt, genutzt werden kann.

An einem ersten Arbeitsanschluss des Umschaltventils kann der erste Zylinder als hydraulische Stützkammer eines verstellbaren Pleuels, beispielsweise der Zylinder auf einer Gaskraftseite (GKS) des Pleuels, angeschlossen sein und an dem zweiten Arbeitsanschluss kann der zweite Zylinder als hydraulische Stützkammer, beispielsweise der Zylinder auf der Massenkraftseite (MKS) des Pleuels angeschlossen sein. Die entsprechenden Kammern werden üblicherweise als GKS-Kammer bzw. MKS-Kammer bezeichnet.

Die drehzahlabhängige Beschleunigung der im Pleuel befindlichen relativ langen Hydraulikflüssigkeitssäulen des als Hydraulikflüssigkeit verwendeten Motoröls können Druckdifferenzen erzeugen. Diese können sich sowohl positiv als auch negativ auswirken, d.h. die Hydraulikflüssigkeitssäulen können so beschleunigt werden, dass das Entleeren und Füllen der Hydraulikkammern der Zylinder des Pleuels unterstützt wird, aber auch, dass dies behindert wird. Vor allem bei einem Zylinder auf der Massenkraftseite (MKS) des Pleuels kann sich dieser Effekt negativ auswirken. Die Beschleunigung der Hydraulikflüssigkeitssäulen kann bewirken, dass sich vor und hinter dem MKS-seitigen Rückschlagventil keine positive Druckdifferenz mehr ausbildet, die bewirkt, dass in die MKS-Kammer Hydraulikflüssigkeit geleitet werden kann. Da die Kammern durch Leckage und andere Effekte immer Hydraulikflüssigkeit verlieren, bewirkt das ein stufenartiges, langsames Verstellen des Exzenters über mehrere Umdrehungen und damit der effektiven Länge des Pleuels von einer Stellung niedriger Verdichtung (ε_{low}), welche der ersten Schaltstellung des Umschaltventils entspricht, in eine Stellung hoher Verdichtung (ε_{high}), welche der zweiten Schaltstellung des Umschaltventils entspricht. Man spricht dabei vom sogenannten Abdriften. Dies tritt vor allem in Motorlastfällen auf mit hohen Massenkräften (Zugkraft und Druckkraft am Pleuel) und niedrigen Gaskräften (Druckkraft am Pleuel). Eine eventuelle Verstellung des Pleuels Richtung ε_{high} durch die Massenkräfte in Zugrichtung kann von den Massenkräften in Druckrichtung und den Gaskräften nicht wieder vollständig zurückgestellt werden.

Dieser Effekt kann mit der Hydraulikanordnung des erfindungsgemäßen Pleuels vorteilhaft vermieden werden dadurch, dass die GKS-Kammer die in der Stellung niedriger Verdichtung (ε_{low}) aufgenommene Hydraulikflüssigkeit direkt und ungedrosselt in die MKS-Kammer leiten kann. Dies kann bewirkt werden, weil die Hydraulikflüssigkeit, die die GKS-Kammer durch die am Pleuel angreifenden Gas- und Massenkräfte in Druckrichtung in die MKS-Kammer drückt, einen wesentlich höheren Druck hat als der Hydraulikflüssigkeitsdruck der Hydraulikversorgung in der Lagerschale des Pleuels. Dadurch kann die Hydraulikflüssigkeit von der GKS-Kammer in die MKS-Kammer gedrückt werden.

Neben der Lagestabilität der Exzenter-Verstelleinrichtung des Pleuels in der Stellung ε_{low}, d.h. dass sich nach einer Umdrehung das Pleuel wieder in seiner Endlage ε_{low} befindet, kann sich auch die Lagestabilität über die Umdrehung, bzw. die Steifigkeit des Pleuels erhöhen. Während einer Umdrehung gibt es nämlich immer eine Bewegung des Exzenterhebels, da die Hydraulikflüssigkeitssäulen auch eine gewisse Flexibilität haben und es so immer zu einem gewissen Einsinken des Stützkolbens in der gefüllten Kammer kommt. Stellt sich das Pleuel bis zum Ende der Umdrehung wieder vollständig zurück, spricht man von "lagestabil". Dennoch könnte bei einer Winkeländerung an dem Exzenter, bzw. der Hebelbaugruppe beim Rückstellen der jeweilige Stützkolben auf den Kammerboden schlagen, was sich auf die Lebensdauer negativ auswirken kann. Aus diesem Grund kann die Verstellgeschwindigkeit der Exzenter-Verstelleinrichtung begrenzt werden durch Drosselstellen in den Hydraulikleitungen. Eine mit Druck belastete vorgespannte MKS-Hydraulikflüssigkeitssäule sinkt vorteilhaft weniger ein als eine nicht vorgespannte Hydraulikflüssigkeitssäule. Weniger Einsinken bedeutet weniger Hebelbewegung, wodurch ist die Lagestabilität in der Stellung ε_{low} verbessert werden kann.

Eine Hydraulikleitung von der GKS-Kammer in Richtung der Hydraulikversorgung mit der Drosselstelle ist vorteilhaft, da GKS-Kammer und MKS-Kammern in der Regel unterschiedliche Größe haben, d.h. die Volumendifferenz von der größeren GKS-Kammer, die von der MKS-Seite nicht aufgenommen werden kann, muss zur Hydraulikversorgung abgelassen werden. Durch die Zwangsverbindung der beiden Stützkolben über die Hebelbaugruppe braucht nur der Differenzvolumenstrom in der Stellung ε_{low}, der zur Hydraulikversorgung geleitet wird, gedrosselt werden, um die Verstellgeschwindigkeit des GKS-Kolbens zu begrenzen, da die MKS-Kammer nicht alles Hydraulikflüssigkeit aufnehmen kann, das die GKS-Kammer bereitstellt. Die Drosselstelle bewirkt dabei vorteilhaft, dass sich vor dem MKS-Rückschlagventil ein Druck aufbaut und damit die MKS-Kammer sicher befüllt werden kann. Die MKS-Kammer wird sozusagen vorgespannt. Die Drosselstelle ist dabei vorteilhafterweise zwischen einem Verzweigungspunkt des Ablaufs und einer Hydraulikversorgung angeordnet, an welchem sich der Ablauf des ersten Zylinders in den Zulauf des zweiten Zylinders und die Versorgungsleitung verzweigt.

Vorteilhaft sind hierfür lediglich zwei Rückschlagventile notwendig. Weitere Rückschlagventile müssen nicht vorgesehen werden.

In der Stellung ε_{high} wird die MKS-Seite gedrosselt mit Hydraulikflüssigkeit versorgt.

Das Umschaltventil kann sowohl mechanisch als auch hydraulisch aktuiert ausgelegt sein und kann an beliebiger Stelle im Pleuel angeordnet sein. Die Volumina der beiden Zylinder können auch gleich gewählt sein.

Vorteilhaft kann in der Stellung hoher Verdichtung ε_{high} des Pleuels so der Ablauf der GKS-Kammer durch das Umschaltventil geschlossen sein. Über das der GKS-Kammer zugeordnete Rückschlagventil kann Hydraulikflüssigkeit fließen. Dabei ist das Rückschlagventil so angeordnet, dass ein Hydraulikflüssigkeitsfluss nur in Befüllungsrichtung möglich ist. Damit kann der GKS-Kammer Hydraulikflüssigkeit zugeführt werden.

Der Ablauf der MKS-Kammer ist über das Umschaltventil geöffnet. Der Hydraulikflüssigkeitsstrom wird über die Drosselstelle geleitet. Ein Hydraulikflüssigkeitsfluss ist in beide Strömungsrichtungen möglich. Über das der MKS-Kammer zugeordnete Rückschlagventil kann ein Hydraulikflüssigkeitsfluss nur in Befüllungsrichtung erfolgen. Der Hydraulikflüssigkeitsstrom wird durch die Drosselstelle in dem Zulauf zur MKS-Kammer geleitet. Dadurch kann Hydraulikflüssigkeit aus der MKS-Kammer abgeführt werden, die MKS-Kammer kann sich entleeren.

Vorteilhaft kann in der Stellung niedriger Verdichtung (ε_{low}) des Pleuels der Ablauf der GKS-Kammer durch das Umschaltventil geöffnet sein. Der Hydraulikflüssigkeitsstrom kann ungedrosselt in Richtung des der MKS-Kammer zugeordneten Rückschlagventils fließen. Der überschüssige Hydraulikflüssigkeitsstrom in Richtung Lagerschale des Pleuels kann durch eine geeignet angeordnete Drosselstelle geleitet werden. Über das der GKS-Kammer zugeordnete Rückschlagventil kann Hydraulikflüssigkeit fließen. Dabei ist das Rückschlagventil so angeordnet, dass ein Hydraulikflüssigkeitsfluss nur in Befüllungsrichtung möglich ist. Dadurch kann sich die GKS-Kammer entleeren.

Der Ablauf der MKS-Kammer ist durch das Umschaltventil geschlossen. Über das der MKS-Kammer zugeordnete Rückschlagventil kann Hydraulikflüssigkeit fließen. Dabei ist das Rückschlagventil so angeordnet, dass ein Hydraulikflüssigkeitsfluss nur in Befüllungsrichtung möglich ist. Auf diese Weise kann sich die MKS-Kammer füllen.

Mit der vorteilhaften Hydraulikanordnung mit dem Umschaltventil zum Steuern eines Hydraulikflüssigkeitsstroms eines Pleuels für eine Brennkraftmaschine mit variabler Verdichtung mit einer Exzenter-Verstelleinrichtung zur Verstellung einer effektiven Pleuelstangenlänge kann so ein stabiles Umschaltverhalten und lagestabiles Betriebsverhalten des Pleuels erreicht werden.

In einer weiteren vorteilhaften Ausgestaltung könnte im Ablauf der GKS-Kammer die Verbindung zur Hydraulikversorgung entfallen, so dass der gesamte Hydraulikflüssigkeitsstrom aus der GKS-Kammer direkt und ungedrosselt in Richtung der MKS-Kammer geleitet wird.

Vorteilhaft kann wenigstens das der MKS-Kammer zugeordnete Rückschlagventil in dem Abgreifer des Umschaltventils integriert sein. Auch Drosselstellen können in den Hydraulikleitungen im Abgreifer, beispielsweise durch Verengungen in den Hydraulikleitungen integriert sein. Auf diese Weise lässt sich der benötigte Bauraum der Hydraulikanordnung möglichst kompakt gestalten.

Gemäß einer vorteilhaften Ausgestaltung kann in der zweiten Schaltstellung Hydraulikflüssigkeit aus dem zweiten Zylinder in den ersten Zylinder leitbar sein. Günstigerweise kann so die Hydraulikflüssigkeit, beispielsweise Motoröl, aus der MKS-Kammer zum Befüllen der GKS-Kammer verwendet werden, so dass das nötige Hydraulikflüssigkeit nicht gänzlich aus der Hydraulikversorgung, beispielsweise der Lagerschale des Pleuels geleitet werden muss.

Gemäß einer vorteilhaften Ausgestaltung kann der Ablauf des zweiten Zylinders wenigstens eine Drosselstelle aufweisen. Auf diese Weise kann in der Stellung für hohe Verdichtung ε_{high} der Hydraulikflüssigkeitsstrom in Richtung der GKS-Kammer gedrosselt geleitet werden, wodurch ein stabiles Umschaltverhalten des Pleuels erreicht werden kann.

Gemäß einer vorteilhaften Ausgestaltung kann eine Hydraulikverbindung zum Befüllen des zweiten Zylinders aus dem ersten Zylinder ungedrosselt ausgebildet sein. Besonders günstig ist auch, wenn die Hydraulikverbindung zum Befüllen des zweiten Zylinders keine Drosselstellen aufweist, so dass die Befüllung der MKS-Kammer aus der GKS-Kammer möglichst effektiv erfolgen kann. Damit kann eine möglichst schnelle Befüllung der MKS-Kammer erreicht werden.

Gemäß einer vorteilhaften Ausgestaltung können das Umschaltventil, die Drosselstellen und/oder wenigstens eines der Rückschlagventile in einem abgeschlossenen Hydraulikmodul integriert sein. Wenigsten das der MKS-Kammer zugeordnete Rückschlagventil, das Umschaltventil und/oder Drosselstellen können in einem separaten Hydraulikmodul integriert sein, welches als Ganzes in ein Pleuel montiert werden kann. Dadurch könnte die Pleuelbearbeitung vorteilhaft vereinfacht werden.

Gemäß einer vorteilhaften Ausgestaltung kann wenigstens eine der Drosselstellen in das Umschaltventil integriert sein. Günstigerweise können Drosselstellen in den Hydraulikleitungen im Abgreifer des Umschaltventils oder auch im Ventilkörper, beispielsweise durch Verengungen in den Hydraulikleitungen, integriert sein. Auf diese Weise lässt sich der benötigte Bauraum der Hydraulikanordnung möglichst kompakt gestalten.

Gemäß einer vorteilhaften Ausgestaltung kann wenigstens eines der Rückschlagventile und/oder wenigstens eine der Drosselstellen in das Umschaltventil integriert sein. Vorteilhaft kann wenigstens das der MKS-Kammer zugeordnete Rückschlagventil in dem Abgreifer oder im Ventilkörper des Umschaltventils integriert sein. Auch Drosselstellen können in den Hydraulikleitungen im Abgreifer oder im Ventilkörper, beispielsweise durch Verengungen in den Hydraulikleitungen integriert sein. Auf diese Weise lässt sich der benötigte Bauraum der Hydraulikanordnung möglichst kompakt gestalten.

Gemäß einer vorteilhaften Ausgestaltung können Zulauf und Ablauf eines Zylinders jeweils in einer gemeinsamen Leitung in den Zylinder münden. Zulauf und Ablauf eines Zylinders lassen sich zusammenführen. Günstigerweise kann beispielsweise der Zulauf über ein Rückschlagventil von der gemeinsamen Leitung abzweigen. Auf diese Weise lässt sich der benötigte Bauraum der Hydraulikanordnung optimieren und das Pleuel möglichst bauraumoptimiert gestalten.

Gemäß einer vorteilhaften Ausgestaltung kann der bewegliche Kolben als Abgriffselement ausgebildet sein. Günstigerweise kann der bewegliche Kolben über geeignet ausgebildete Bohrungen im Kolben Arbeitsanschlüsse und/oder Versorgungsanschlüsse im Ventilkörper des Umschaltventils verbinden und so als Abgriffselement arbeiten. Das Abgriffselement kann über geeignete Verrastungen verschiedene Schaltstellungen des Umschaltventils einnehmen, so dass die Anschlüsse des Umschaltventils zuverlässig verbunden sein können.

Ein günstiges Umschaltventil zur Verwendung in der Hydraulikanordnung des Pleuels umfasst wenigstens einen Ventilkörper und einen beweglichen Kolben, welcher wahlweise in eine erste Schaltstellung oder eine zweite Schaltstellung verlagerbar ist. Dabei ist in der ersten Schaltstellung wenigstens ein erster Arbeitsanschluss mit einem ersten Versorgungsanschluss und in der zweiten Schaltstellung wenigstens ein zweiter Arbeitsanschluss mit einem zweiten Versorgungsanschluss verbunden.

An dem ersten Arbeitsanschluss des erfindungsgemäßen Umschaltventils kann ein erster Zylinder als hydraulische Stützkammer eines verstellbaren Pleuels, beispielsweise der Zylinder auf der Gaskraftseite (GKS) des Pleuels, angeschlossen sein und an dem zweiten Arbeitsanschluss kann ein zweiter Zylinder als hydraulische Stützkammer, beispielsweise der Zylinder auf der Massenkraftseite (MKS) des Pleuels angeschlossen sein.

Gemäß einer vorteilhaften Ausgestaltung kann eine Hydraulikflüssigkeitsleitung zwischen einem Arbeitsanschluss und einem Versorgungsanschluss wenigstens eine Drosselstelle aufweisen. Günstigerweise können Drosselstellen in den Hydraulikleitungen in einem Abgriffselement des Umschaltventils oder auch im Ventilkörper, beispielsweise durch Verengungen in den Hydraulikleitungen, integriert sein. Auf diese Weise lässt sich der benötigte Bauraum der Hydraulikanordnung möglichst kompakt gestalten.

Gemäß einer vorteilhaften Ausgestaltung kann eine Hydraulikflüssigkeitsleitung zwischen einem Arbeitsanschluss und einem Versorgungsanschluss wenigstens ein Rückschlagventil und/oder wenigstens eine Drosselstelle aufweisen.

Vorteilhaft kann im Umschaltventil ein Rückschlagventil vorgesehen sein, welches ein Entleeren des zugeordneten Zylinders und die Zuleitung der Hydraulikflüssigkeit in den anderen Zylinder ermöglicht. Das Rückschlagventil kann vorteilhaft direkt im Abgriffselement des Umschaltventils angeordnet sein.

Das Abgriffselement kann beispielsweise in einer Bohrung des Ventilgehäuses verschiebbar angeordnet und wahlweise in die erste Schaltstellung oder die zweite Schaltstellung verlagerbar sein, wobei in der ersten Schaltstellung der Ablauf des ersten Zylinders und in der zweiten Schaltstellung der Ablauf des zweiten Zylinders mit dem Umschaltventil verbunden ist. Hydraulikflüssigkeit aus dem Ablauf des ersten Zylinders kann dabei in der ersten Schaltstellung des Umschaltventils erfindungsgemäß von dem ersten Arbeitsanschluss des Umschaltventils über das Rückschlagventil zum zweiten Arbeitsanschluss geleitet werden und so zum Füllen des zweiten Zylinders genutzt werden. Damit wird vorteilhaft vermieden, dass die Hydraulikflüssigkeit erst über den Versorgungsanschluss des Umschaltventils, welcher in eine Versorgungsleitung zu einem Tank mündet, zurückgeführt werden muss und erst wieder über die Versorgungsleitung aus dem Tank dem zweiten Zylinder zugeführt werden kann.

Vorteilhaft kann so in der ersten Schaltstellung des Umschaltventils Hydraulikflüssigkeit beispielsweise aus der GKS-Kammer des Pleuels über den ersten Arbeitsanschluss und weiter über das sich öffnende Rückschlagventil in eine Öffnung des Abgriffselements ablaufen und der MKS-Kammer des Pleuels über den zweiten Arbeitsanschluss zugeführt werden. In Richtung der GKS-Kammer dagegen sperrt das Rückschlagventil, so dass die MKS-Kammer gegen eine Entleerung gesperrt ist. Auf diese Weise ist eine schnelle Befüllung der MKS-Kammer möglich.

Bei dem erfindungsgemäßen Pleuel für eine Brennkraftmaschine mit variabler Verdichtung mit einer Exzenter-Verstelleinrichtung zur Verstellung einer effektiven Pleuelstangenlänge mit einer Hydraulikanordnung weist die Exzenter-Verstelleinrichtung wenigstens einen ersten Zylinder und einen zweiten Zylinder auf, wobei sowohl jeweils ein Zulauf zum Zuführen von Hydraulikflüssigkeit in die Zylinder über eine Versorgungsleitung als auch jeweils ein Ablauf zum Abführen von Hydraulikflüssigkeit von den Zylindern vorgesehen sind.

Das Pleuel umfasst wenigstens ein Umschaltventil, wobei das Umschaltventil einen beweglichen Kolben, insbesondere ein Abgriffselement, aufweist, welches wahlweise in eine erste Schaltstellung oder eine zweite Schaltstellung verlagerbar ist, wobei in der ersten Schaltstellung der Ablauf des ersten Zylinders und in der zweiten Schaltstellung der Ablauf des zweiten Zylinders mit der Versorgungsleitung verbunden ist. Den Zylindern ist jeweils ein Rückschlagventil zugeordnet, welches ein Zuführen von Hydraulikflüssigkeit in die Zylinder ermöglicht und ein Abführen von Hydraulikflüssigkeit von den Zylindern verhindert. Dabei sind die Zylinder derart verbunden, dass in der ersten Schaltstellung Hydraulikflüssigkeit aus dem ersten Zylinder in den zweiten Zylinder leitbar ist.

Günstigerweise lässt sich mit dem Umschaltventil eine sichere Befüllung der MKS-Kammer direkt aus dem Volumen der GKS-Kammer erreichen. Auch wird vermieden, dass das Pleuel unter bestimmten Betriebsbedingungen seine Stellung von der Stellung niedriger Verdichtung ungewollt in die Stellung hoher Verdichtung verändert. Gerade bei höheren Drehzahlen der Brennkraftmaschine kann es vorkommen, dass bei geschleppter Brennkraftmaschine die MKS-Kammer nicht mehr sicher über ein Rückschlagventil vor der MKS-Kammer aus der Versorgungsleitung der Hydraulikflüssigkeit befüllt werden kann, da bei steigenden Drehzahlen die Massen- und Druckkräfte für ein Öffnen des Rückschlagventils immer ungünstiger werden. Die MKS-Kammer kann sich durch Leckage entleeren, aber aufgrund des Nichtöffnens des Rückschlagventils nicht mehr befüllt werden. Ein Rückschlagventil vor der GKS-Kammer unterliegt nicht diesen Bedingungen, so dass sich die GKS-Kammer langsam befüllt. Aufgrund fehlender Gaskräfte, es wirken nur noch Massenkräfte, entleert sich diese nicht mehr.

Durch das Umschaltventil mit integriertem Rückschlagventil kann diese Situation umgangen werden, da erfindungsgemäß die MKS-Kammer direkt aus dem Volumen der Hydraulikflüssigkeit der GKS-Kammer befüllt werden kann. Das Rückschlagventil verhindert dabei vorteilhaft, dass sich die MKS-Kammer darüber wieder in die GKS-Kammer zurück entleeren kann.

Das Abgriffselement kann beispielsweise in einer Bohrung des Ventilgehäuses verschiebbar angeordnet und wahlweise in die erste Schaltstellung oder die zweite Schaltstellung verlagerbar sein, wobei in der ersten Schaltstellung der Ablauf des ersten Zylinders und in der zweiten Schaltstellung der Ablauf des zweiten Zylinders mit dem Umschaltventil verbunden ist. Hydraulikflüssigkeit aus dem Ablauf des ersten Zylinders kann dabei in der ersten Schaltstellung des Umschaltventils erfindungsgemäß von dem ersten Arbeitsanschluss des Umschaltventils über das Rückschlagventil zum zweiten Arbeitsanschluss geleitet werden und so zum Füllen des zweiten Zylinders genutzt werden. Damit wird vorteilhaft vermieden, dass die Hydraulikflüssigkeit erst über den Versorgungsanschluss des Umschaltventils, welcher in eine Versorgungsleitung zu einem Tank mündet, zurückgeführt werden muss und erst wieder über die Versorgungsleitung aus dem Tank dem zweiten Zylinder zugeführt werden kann.

Vorteilhaft kann so in der ersten Schaltstellung des Umschaltventils Hydraulikflüssigkeit beispielsweise aus der GKS-Kammer des Pleuels über den ersten Arbeitsanschluss und weiter über das sich öffnende Rückschlagventil in eine Öffnung des Abgriffselements ablaufen und der MKS-Kammer des Pleuels über den zweiten Arbeitsanschluss zugeführt werden. In Richtung der GKS-Kammer dagegen sperrt das Rückschlagventil, so dass die MKS-Kammer gegen eine Entleerung gesichert ist. Auf diese Weise ist eine schnelle Befüllung der MKS-Kammer möglich.

Gleichzeitig kann überschüssige Hydraulikflüssigkeit, wenn das Volumen der GKS-Kammer größer als das Volumen der MKS-Kammer ist, über den Versorgungsanschluss in Richtung Versorgungsleitung gedrosselt ablaufen.

Die Zufuhr an Hydraulikflüssigkeit über den zweiten Arbeitsanschluss des Umschaltventils kann dabei günstigerweise gedrosselt erfolgen, um eine stabile Funktion der Exzenter-Verstelleinrichtung zu erreichen. Die Drosselung des zweiten Arbeitsanschlusses kann zweckmäßigerweise auch erst nach dem Umschaltventil erfolgen.

In der zweiten Schaltstellung des Umschaltventils dageben sperrt das Rückschlagventil in Richtung der GKS-Kammer, so dass Hydraulikflüssigkeit aus der MKS-Kammer nicht direkt in die GKS-Kammer des Pleuels geleitet werden kann, sondern erst in den Versorgungsanschluss des Umschaltventils und damit in die Versorgungsleitung des Pleuels gedrosselt abgeleitet wird. Die GKS-Kammer kann dann nur über ein Nachfördern von Hydraulikflüssigkeit über die Versorgungsleitung aus der Hydraulikversorgung befüllt werden.

Die erste Schaltstellung entspricht bei dieser Verschaltung des Umschaltventils mit der Exzenter-Verstelleinrichtung einer Stellung niedriger Verdichtung ε_{low} des Pleuels, während die zweite Schaltstellung einer Stellung hoher Verdichtung ε_{high} des Pleuels entspricht.

Gemäß einer vorteilhaften Ausgestaltung kann wenigstens eines der Rückschlagventile wenigstens ein Schließelement aufweisen, welches als elastisches Ringband ausgebildet ist und einen Ventilkörper wenigstens teilweise auf seinem Umfang umschließt. Das Schließelement ist günstigerweise als Ringband, beispielsweise als elastisches Blechband vorgesehen, welches auf seinem Umfang an einer Stelle geschlitzt sein kann, so dass es nach radial außen aufgeweitet oder nach innen zusammengedrückt werden kann. Ein solches elastisches Blechband weist genügend Eigenspannung auf, um eine Öffnung, vorteilhafterweise auf einem Umfang eines zylindrischen Ventilkörpers, durch die Federspannung zu verschließen. Das Schließelement kann dann durch einen genügend hohen Hydraulikdruck in einer Durchgangsrichtung den Fluidpfad freigeben, während in Gegenrichtung der Fluidpfad durch Hydraulikdruck auf das Schließelement gesperrt wird. Auf diese Weise kann die Funktion eines Rückschlagventils einfach und kostengünstig umgesetzt werden. Es werden keine zusätzlichen Komponenten benötigt, da Schließelement und Federelement in einem Bauteil realisiert sind. Durch Wahl eines geeigneten elastischen Blechbands als Ringband kann der nötige Druck zum Öffnen des Schließelements eingestellt werden, beispielsweise über die Blechstärke. Auch ist ein solches Ringband als Schließelement sehr platzsparend, so dass eine kompakte Bauweise für das Rückschlagventil zu realisieren ist. Ein solches Rückschlagventil ist robust in seiner Funktion, weist hohe Zuverlässigkeit und Lebensdauer auf. Durch die kompakte Anordnung des Schließelements ist es einfach zu montieren und kann in ein Pleuel auf einfache Weise integriert werden.

### Kurze Beschreibung der Zeichnungen

Weitere Vorteile ergeben sich aus der folgenden Zeichnungsbeschreibung. In den Zeichnungen ist ein Ausführungsbeispiel der Erfindung schematisch dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: eine erfindungsgemäße Hydraulikanordnung in einer zweiten Schaltstellung für hohe Verdichtung in schematischer Darstellung;
- Fig. 2: die Hydraulikanordnung aus Fig. 1 in einer ersten Schaltstellung für niedrige Verdichtung;
- Fig. 3: eine Hydraulikanordnung nach einem weiteren Ausführungsbeispiel der Erfindung in der zweiten Schaltstellung;
- Fig. 4: die Hydraulikanordnung aus Fig. 3 in der ersten Schaltstellung;
- Fig. 5: eine Hydraulikanordnung nach einem weiteren Ausführungsbeispiel der Erfindung in der zweiten Schaltstellung;
- Fig. 6: die Hydraulikanordnung aus Fig. 5 in der ersten Schaltstellung;
- Fig. 7: eine Hydraulikanordnung nach einem weiteren Ausführungsbeispiel der Erfindung in der ersten Schaltstellung für niedrige Verdichtung;
- Fig. 8: eine Hydraulikanordnung nach einem weiteren Ausführungsbeispiel der Erfindung in der ersten Schaltstellung für niedrige Verdichtung;
- Fig. 9: ein erfindungsgemäßes Pleuel in der Stellung für hohe Verdichtung in einer Seitenansicht mit eingezeichneten Schnittebenen D-D, F-F und G-G;
- Fig. 10: das Pleuel in einem Längsschnitt F-F in Fig. 9 mit eingezeichnetem vergrößertem Ausschnitt W;
- Fig. 11: das Pleuel in einem Längsschnitt G-G in Fig. 9;
- Fig. 12: das Pleuel in einer Vorderansicht mit eingezeichneten Schnittebenen C-C und E-E;
- Fig. 13: das Pleuel in einem Längsschnitt C-C in Fig. 12 mit eingezeichnetem vergrößertem Ausschnitt X;
- Fig. 14: das Pleuel in einem Längsschnitt E-E in Fig. 12 mit eingezeichnetem vergrößertem Ausschnitt Y;
- Fig. 15: das Pleuel in einem Längsschnitt A-A in Fig. 16 mit eingezeichneter Schnittebene B-B;
- Fig. 16: das Pleuel in einem Längsschnitt B-B in Fig. 15 mit eingezeichneter Schnittebene A-A;
- Fig. 17: der vergrößerte Ausschnitt X des Pleuels in Fig. 13;
- Fig. 18: der vergrößerte Ausschnitt Y des Pleuels in Fig. 14;
- Fig. 19: das Pleuel nach Fig. 9 in isometrischer Ansicht;
- Fig. 20: das Pleuel in einem Querschnitt D-D in Fig. 9 mit eingezeichnetem vergrößertem Ausschnitt Z;
- Fig. 21: der vergrößerte Ausschnitt Z des Pleuels in Fig. 20;
- Fig. 22: der vergrößerte Ausschnitt W des Pleuels in Fig. 10;
- Fig. 23: das erfindungsgemäße Pleuel in einer Stellung für niedrige Verdichtung in einer Seitenansicht mit eingezeichneten Schnittebenen D-D, F-F und G-G;
- Fig. 24: das Pleuel in einem Längsschnitt F-F in Fig. 23 mit eingezeichnetem vergrößertem Ausschnitt W;
- Fig. 25: das Pleuel in einem Längsschnitt G-G in Fig. 23;
- Fig. 26: ein erfindungsgemäßes Pleuel in einer Vorderansicht mit eingezeichneten Schnittebenen C-C und E-E;
- Fig. 27: das Pleuel in einem Längsschnitt C-C in Fig. 26 mit eingezeichnetem vergrößertem Ausschnitt X;
- Fig. 28: das Pleuel in einem Längsschnitt E-E in Fig. 26 mit eingezeichnetem vergrößertem Ausschnitt Y;
- Fig. 29: das Pleuel in einem Längsschnitt A-A in Fig. 30 mit eingezeichneter Schnittebene B-B;
- Fig. 30: das Pleuel in einem Längsschnitt B-B in Fig. 29 mit eingezeichneter Schnittebene A-A;
- Fig. 31: der vergrößerte Ausschnitt X des Pleuels in Fig. 27;
- Fig. 32: der vergrößerte Ausschnitt Y des Pleuels in Fig. 28;
- Fig. 33: das Pleuel in isometrischer Ansicht;
- Fig. 34: das Pleuel in einem Querschnitt D-D in Fig. 23 mit eingezeichnetem vergrößertem Ausschnitt Z;
- Fig. 35: der vergrößerte Ausschnitt Z des Pleuels in Fig. 34;
- Fig. 36: der vergrößerte Ausschnitt W des Pleuels in Fig. 24;
- Fig. 37: ein erfindungsgemäßes Rückschlagventil in isometrischer Darstellung;
- Fig. 38: das Rückschlagventil aus Fig. 37 in um 90° um eine Längsachse gedrehter isometrischer Darstellung;
- Fig. 39: das Rückschlagventil aus Fig. 37 in einer Seitenansicht;
- Fig. 40: das Rückschlagventil in um 90° um die Längsachse gedrehter Seitenansicht;
- Fig. 41: das Rückschlagventil in um 180° um die Längsachse gedrehter Seitenansicht mit eingezeichneten Schnittebenen A-A und B-B;
- Fig. 42: das Rückschlagventil im Längsschnitt A-A in Fig. 41;
- Fig. 43: das Rückschlagventil im Querschnitt B-B in Fig. 41; und
- Fig. 44: das Rückschlagventil in einer Draufsicht.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

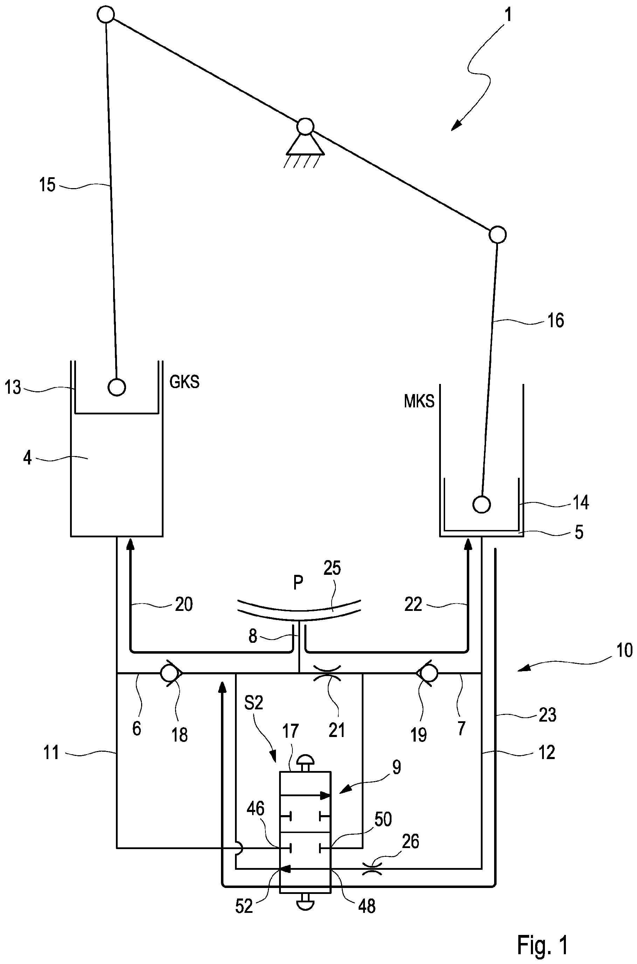

Den Figuren 1 bis 8 sind Ausführungsbeispiele einer erfindungsgemäßen Hydraulikanordnung 10 zu entnehmen. Ein Pleuel 1, in welchem die erfindungsgemäße Hydraulikanordnung 10 vorteilhafterweise Anwendung findet, ist in diesen Figuren nur schematisch dargestellt.

Figur 1 zeigt die erfindungsgemäße Hydraulikanordnung 10 in einer zweiten Schaltstellung S2 für hohe Verdichtung ε_{high} in schematischer Darstellung.

Die Hydraulikanordnung 10 umfasst ein Umschaltventil 9 zum Steuern eines Hydraulikflüssigkeitsstroms des Pleuels 1 für eine Brennkraftmaschine mit variabler Verdichtung mit einer Exzenter-Verstelleinrichtung 3 zur Verstellung einer effektiven Pleuelstangenlänge. Die Exzenter-Verstelleinrichtung 3 weist einen ersten Zylinder 4 und einen zweiten Zylinder 5 als Hydraulikkammern auf, wobei sowohl jeweils ein Zulauf 6, 7 zum Zuführen von Hydraulikflüssigkeit in die Zylinder 4, 5 über eine Versorgungsleitung 8 als auch jeweils ein Ablauf 11, 12 zum Abführen von Hydraulikflüssigkeit von den Zylindern 4, 5 vorgesehen sind. Das Umschaltventil 9 weist einen beweglichen Kolben 17 auf, welcher wahlweise in eine erste Schaltstellung S1 oder eine zweite Schaltstellung S2 verlagerbar ist, wobei in der ersten Schaltstellung S1 der Ablauf 11 des ersten Zylinders 4 und in der zweiten Schaltstellung S2 der Ablauf 12 des zweiten Zylinders 5 mit der Versorgungsleitung 8 verbunden ist.

Zylinder 4 stellt dabei eine Hydraulikkammer auf der Gaskraftseite (GKS) des Pleuels 1 dar, während Zylinder 5 eine Hydraulikkammer auf der Massenkraftseite (MKS) des Pleuels 2 darstellt.

Den Zylindern 4, 5 ist jeweils ein Rückschlagventil 18, 19 zugeordnet, welches ein Zuführen von Hydraulikflüssigkeit in die Zylinder 4, 5 ermöglicht und ein Abführen von Hydraulikflüssigkeit von den Zylindern 4, 5 verhindert. Zulauf 6, 7 und Ablauf 11, 12 eines Zylinders 4, 5 münden jeweils in einer gemeinsamen Leitung in den Zylinder 4, 5. Vorteilhaft sind im Rahmen der Erfindung lediglich zwei Rückschlagventile 18, 19 notwendig. Weitere Rückschlagventile müssen nicht vorgesehen werden.

Das Umschaltventil 9 umfasst einen Ventilkörper 64 und einen beweglichen Kolben 17, welcher wahlweise in eine erste Schaltstellung S1 oder eine zweite Schaltstellung S2 verlagerbar ist, wobei in der ersten Schaltstellung S1 wenigstens ein erster Arbeitsanschluss 46 mit einem ersten Versorgungsanschluss 50 und in der zweiten Schaltstellung S2 wenigstens ein zweiter Arbeitsanschluss 48 mit einem zweiten Versorgungsanschluss 52 verbunden ist. Der bewegliche Kolben 17 des Umschaltventils 9 ist als Abgriffselement ausgebildet. Eine Hydraulikflüssigkeitsleitung zwischen einem Arbeitsanschluss 46, 48 und einem Versorgungsanschluss 50, 52 kann dabei wenigstens ein Rückschlagventil 18, 19 und/oder wenigstens eine Drosselstelle 21, 26 aufweisen.

In der ersten Schaltstellung S1 ist der erste Ablauf 11 und in der zweiten Schaltstellung S2 der zweite Ablauf 12 mit der Versorgungsleitung 8 verbunden. Dabei sind die Kammern 4, 5 derart verbunden sind, dass Hydraulikflüssigkeit aus der GKS-Kammer 4 in der Stellung ε_{low} direkt und ungedrosselt in die MKS-Kammer 5 geleitet werden kann.

Der Ablauf 11 der GKS-Kammer 4 ist mit dem ersten Arbeitsanschluss 46 des Abgriffselements 17 verbunden, während der Zulauf 6 zwischen der Lagerschale 25 mit der Hydraulikversorgung P und dem Rückschlagventil 18 mit dem zweiten Versorgungsanschluss 52 verbunden ist. Der Ablauf 12 der MKS-Kammer 5 ist mit dem zweiten Arbeitsanschluss 48 und der Zulauf 7 mit dem ersten Versorgungsanschluss 50 verbunden. Die Verbindung zwischen den Arbeitsanschlüssen 46, 48 und den Versorgungsanschlüssen 50, 52 wird durch die interne Leitungsführung des Abgriffselement 17 entsprechend der Schaltstellung S1, S2 des Abgriffselements 17 und damit des Umschaltventils 9 festgelegt.

In der zweiten Schaltstellung S2 ist Hydraulikflüssigkeit aus dem zweiten Zylinder 5 in den ersten Zylinder 4 leitbar. Der Ablauf 12 des zweiten Zylinders 5 weist vorteilhaft eine Drosselstelle 26 auf.

Der Ablauf 11 der GKS-Kammer 4 ist durch das Umschaltventil 9 geschlossen. Über das Rückschlagventil 18 im Zulauf 6 kann Hydraulikflüssigkeit fließen, was durch den Hydraulikfluss 20 angedeutet ist. Dabei ist das Rückschlagventil 18 so angeordnet, dass ein Hydraulikfluss 20 nur in Befüllungsrichtung möglich ist. Die GKS-Kammer 4 füllt sich mit Hydraulikflüssigkeit.

Der Ablauf 12 der MKS-Kammer 5 ist durch das Umschaltventil 9 geöffnet. Dabei wird der Volumenstrom über eine Drosselstelle 26 geleitet. Ein Hydraulikfluss ist in beide Strömungsrichtungen 22, 23 möglich.

Über das Rückschlagventil 19 kann Hydraulikflüssigkeit fließen. Dabei ist das Rückschlagventil 19 so angeordnet, dass ein Hydraulikfluss 22 nur in Befüllungsrichtung möglich ist. Der Volumenstrom wird durch die Drossel/Blende 21 geleitet. Die MKS-Kammer 5 entleert sich.

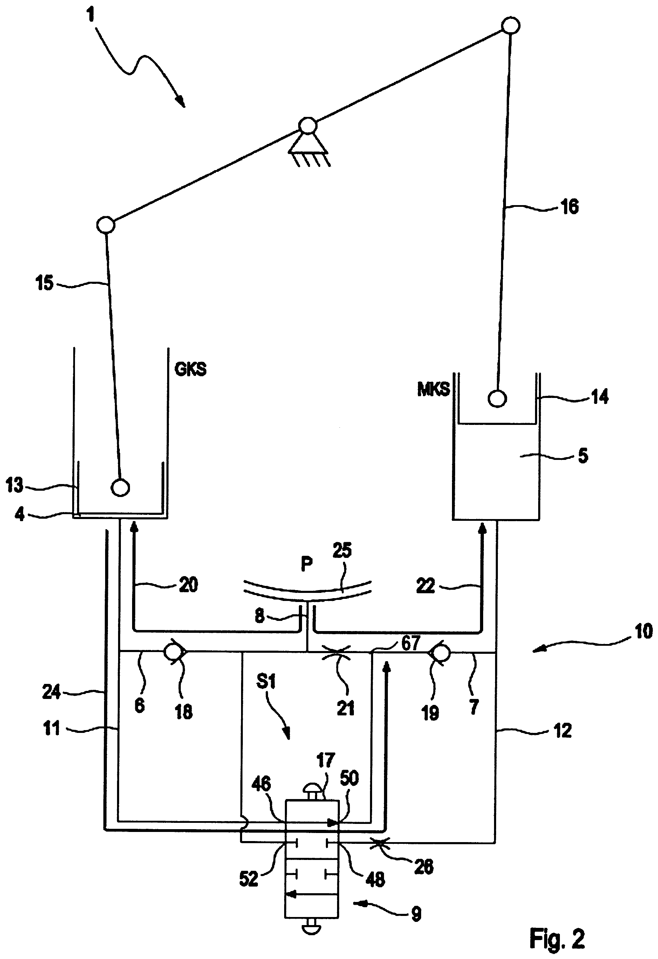

Figur 2 stellt die Hydraulikanordnung 10 aus Figur 1 in einer ersten Schaltstellung S1 für niedrige Verdichtung ε_{low} dar. Die Zylinder 4, 5 sind dabei derart verbunden, dass in der ersten Schaltstellung S1 Hydraulikflüssigkeit aus dem ersten Zylinder 4 in den zweiten Zylinder 5 leitbar ist. Die Hydraulikverbindung zum Befüllen des zweiten Zylinders 5 aus dem ersten Zylinder 4 ist ungedrosselt ausgebildet. Zwischen der Versorgungsleitung 8 und dem Zulauf 7 des zweiten Zylinders 5 ist jedoch eine Drosselstelle 21 angeordnet.

Der Ablauf 11 der GKS-Kammer 4 ist durch das Umschaltventil 9 geöffnet, wie durch den Hydraulikfluss 24 angedeutet ist. Der Volumenstrom kann ungedrosselt in Richtung Rückschlagventil 19 der MKS-Kammer 5 fließen. Der überschüssige Volumenstrom in Richtung der Lagerschale 25 wird durch die Drosselstelle 21 geleitet. Wie aus Figur 2 ersichtlich ist, ist die Drosselstelle 21 zwischen einem Verzweigungspunkt 67 des Ablaufs 11 und der Hydraulikversorgung P angeordnet, damit die Hydraulikflüssigkeit ungedrosselt in die MSK-Kammer 5 fließen kann. Am Verzweigungspunkt 67 verzweigt sich der Ablauf 11 der GKS-Kammer 4 in den Zulauf 7 der MKS-Kammer 5 und die Versorgungsleitung 8.

Über das Rückschlagventil 18 der GKS-Kammer 4 kann Hydraulikflüssigkeit fließen. Dabei ist das Rückschlagventil 18 so angeordnet, dass ein Hydraulikfluss 20 nur in Befüllungsrichtung möglich ist. Die GKS-Kammer 4 entleert sich.

Der Ablauf 12 der MKS-Kammer 5 ist durch das Umschaltventil 9 verschlossen.

Über das Rückschlagventil 19 der MKS-Kammer 5 kann Hydraulikflüssigkeit fließen. Dabei ist das Rückschlagventil so angeordnet, dass ein Hydraulikfluss 22 nur in Befüllungsrichtung möglich ist. Die MKS-Kammer 5 füllt sich mit Hydraulikflüssigkeit.

Das Umschaltventil 9 kann wie in dem beschriebenen Ausführungsbeispiel des Pleuels 1 mechanisch aktuiert sein, im Rahmen der Erfindung ist jedoch auch der Einsatz eines (Hydraulikventils) hydraulisch betätigten Ventils denkbar.

Mit der erfindungsgemäßen Hydraulikanordnung 10 ist es vorteilhaft möglich, die Lagestabilität der Exzenter-Verstelleinrichtung des Pleuels 1 in der Stellung niedriger Verdichtung ε_{low}, insbesondere bei hohen Motordrehzahlen zu gewährleisten.

Die drehzahlabhängige Beschleunigung der in den Zylindern 4, 5 des Pleuels 1 befindlichen relativ langen Hydraulikflüssigkeitssäulen erzeugen Druckdifferenzen. Diese können sich sowohl positiv als auch negativ auswirken, d.h. die Hydraulikflüssigkeitssäulen können so beschleunigt werden, dass das Entleeren und Füllen der Kammern 4, 5 unterstützt wird, aber auch dass dies behindert wird. Vor allem auf der MKS-Seite kann sich dieser Effekt negativ auswirken. Die Beschleunigung der Hydraulikflüssigkeitssäulen kann bewirken, dass sich vor und hinter dem MKS-seitigen Rückschlagventil 19 keine positive Druckdifferenz mehr ausbildet, die bewirkt, dass in die MKS-Kammer 5 Hydraulikflüssigkeit geleitet werden kann. Da die Kammern 4, 5 durch Leckage und andere Effekte immer Hydraulikflüssigkeit verlieren, bewirkt das ein stufenartiges langsames Verstellen des Exzenters über mehrere Umdrehungen und damit der effektiven Länge des Pleuels 1 von der Stellung ε_{low} nach ε_{high}, dem sogenannten Abdriften. Dies tritt vor allem in Motorlastfällen auf mit hohen Massenkräften (Zugkraft und Druckkraft am Pleuel 1) und niedrigen Gaskräften (Druckkraft am Pleuel 1). Eine eventuelle Verstellung des Pleuels 1 Richtung der Stellung ε_{high} durch die Massenkräfte in Zugrichtung kann von den Massenkräften in Druckrichtung und den Gaskräften nicht wieder vollständig zurückgestellt werden. Dieser Effekt wird mit der erfindungsgemäßen Hydraulikanordnung 10 verhindert. Dies erfolgt, wie oben bereits beschrieben, dadurch, dass die GKS-Kammer 4 in der Stellung ε_{low} ihre aufgenommene Hydraulikflüssigkeit direkt und ungedrosselt in die MKS-Kammer 5 leitet. Die Hydraulikflüssigkeit, die die GKS-Kammer 4 durch die am Pleuel 1 angreifenden Gaskräfte und in Druckrichtung wirkenden Massenkräfte in die MKS-Kammer 5 leitet, hat in den meisten Motorbetriebspunkten einen wesentlich höheren Druck als der Hydraulikdruck in der Hydraulikversorgung P der Lagerschale 25. Dadurch kann die Hydraulikflüssigkeit von der GKS-Kammer 4 in die MKS-Kammer 5 gedrückt werden und die MKS-Kammer 5 wird hydraulisch vorgespannt.

Neben der globalen Lagerstabilität in der Stellung ε_{low}, d.h. nach einer Umdrehung befindet sich das Pleuel 1 wieder in seiner Endlage ε_{low}, wird sich auch die Lagestabilität über die Umdrehung, bzw. die Steifigkeit des Pleuels 1 erhöhen.

Während einer Umdrehung gibt es immer eine Hebelbewegung, da die Hydraulikflüssigkeitssäulen auch eine gewisse Flexibilität haben und es so immer zu einem gewissen Einsinken des Stützkolbens in der gefüllten Kammer 4, 5 kommt. Stellt sich das Pleuel 1 bis zum Ende der Umdrehung wieder vollständig zurück, spricht man von "lagestabil". Dennoch ist eine Winkeländerung am Exzenter/Hebelbaugruppe nicht gewollt, da beim Rückstellen der jeweilige Stützkolben auf den Kammerboden schlagen kann. Die Verstellgeschwindigkeit kann dazu vorteilhaft durch die Blendenbohrungen der Drosselstellen 21, 26 begrenzt werden. Eine mit Druck belastete vorgespannte MKS-Hydraulikflüssigkeitssäule sinkt weniger ein als eine nicht vorgespannte Hydraulikflüssigkeitssäule. Geringeres Einsinken bedeutet weniger Hebelbewegung und damit kann die Lagestabilität in der Stellung ε_{low} verbessert werden.

Die Hydraulikleitung von der GKS-Kammer 4 in Richtung der Lagerschale 25 mit der Drosselstelle 21 ist vorteilhaft, da die Kammern 4, 5 unterschiedliche Größe haben, d.h. die Volumendifferenz von der größeren GKS-Kammer 4, die von der MKS-Kammer 5 nicht aufgenommen wird, kann in Richtung der Lagerschale 25 abgelassen werden, da sich sonst die GKS-Kammer 4 immer füllen würde und die Exzenter-Verstelleinrichtung schaltunabhängig immer in die Stellung ε_{high} gelangen würde. Vor der Hydraulikversorgung P der Lagerschale 25 und damit auch vor dem Rückschlagventil 19 bildet sich so ein Hydraulikdruck aus. Durch die Zwangsverbindung der beiden Stützkolben (GKS-Kolben und MKS-Kolben) über die Hebelbaugruppe kann der Differenzvolumenstrom in der Stellung ε_{low}, der in Richtung der Lagerschale 25 fließt, vorteilhaft gedrosselt werden, um die Verstellgeschwindigkeit des GKS-Kolbens zu begrenzen, da die MKS-Kammer 5 nicht das gesamte Volumen der Hydraulikflüssigkeit aufnehmen kann, welche die GKS-Kammer 4 bereitstellt. Die Drosselstelle 21, welche wie oben beschrieben zwischen dem Verzweigungspunkt 67 und der Hydraulikversorgung P angeordnet ist, bewirkt also eine Bremsung des GKS-Kolbens, wodurch ein entsprechender Druck vor dem Rückschlagventil 19 der MKS-Kammer 5 entsteht und diese in der ersten Schaltstellung S1 sicher befüllt werden kann.

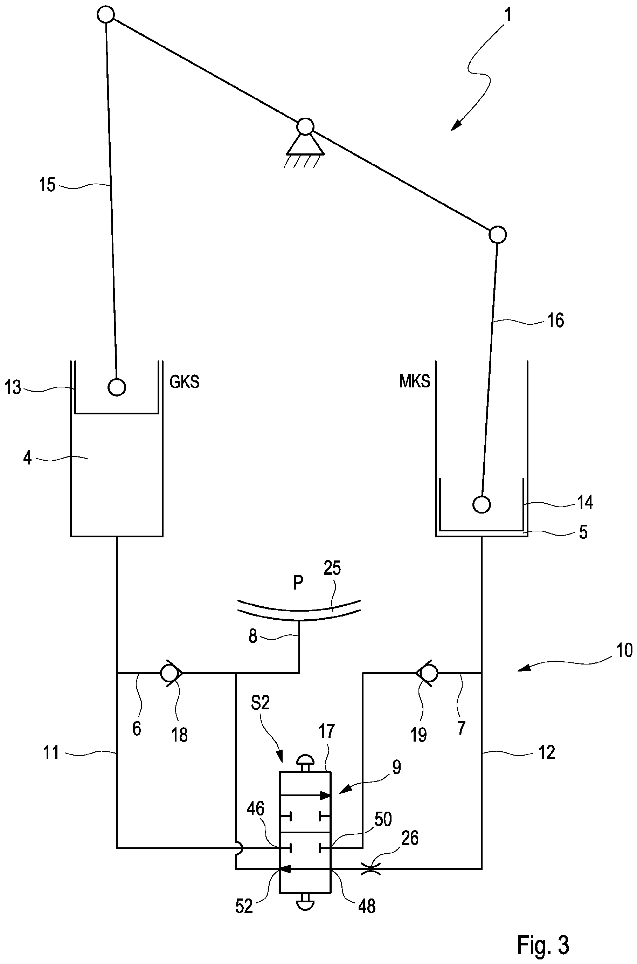

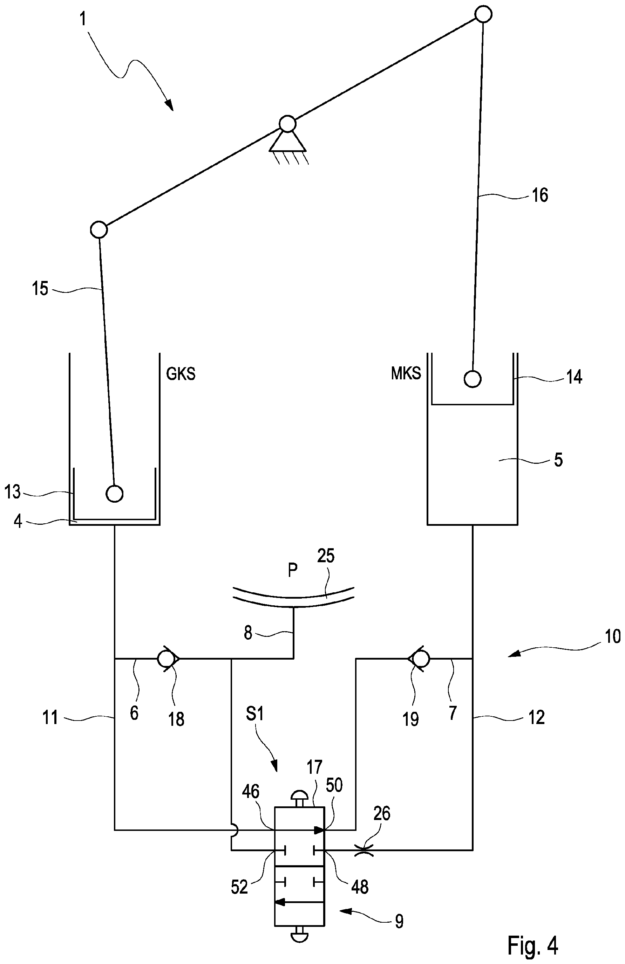

Figur 3 zeigt eine Hydraulikanordnung 10 nach einem weiteren Ausführungsbeispiel der Erfindung in der zweiten Schaltstellung S2, während Figur 4 die Hydraulikanordnung 10 aus Figur 3 in der ersten Schaltstellung S1 darstellt. Bei diesem Ausführungsbeispiel weisen die Zylinder 4 als GKS-Kammer und Zylinder 5 als MKS-Kammer gleiche Verstellvolumina auf. Dabei kann die Verbindung von der GKS-Kammer 4 zu der Lagerschale 25 mit der Drosselstelle 21 entfallen. Die GKS-Kammer 4 leitet das gesamte Volumen an Hydraulikflüssigkeit ungedrosselt in die MKS-Kammer 5. Die MKS-Kammer 5 hat keine direkte und permanente Verbindung mehr zur Hydraulikversorgung P über die Lagerschale 25.

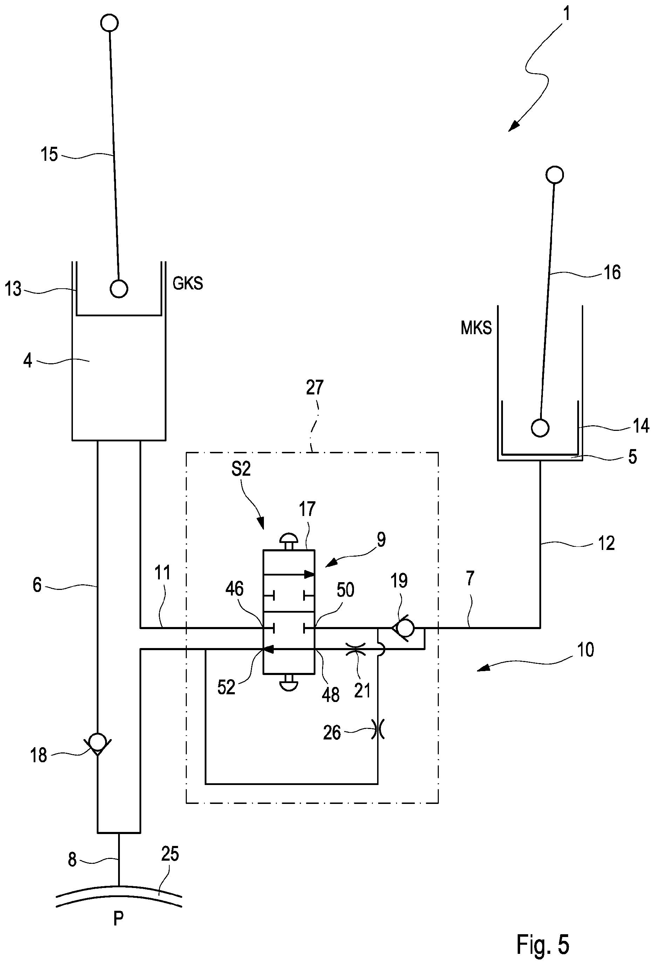

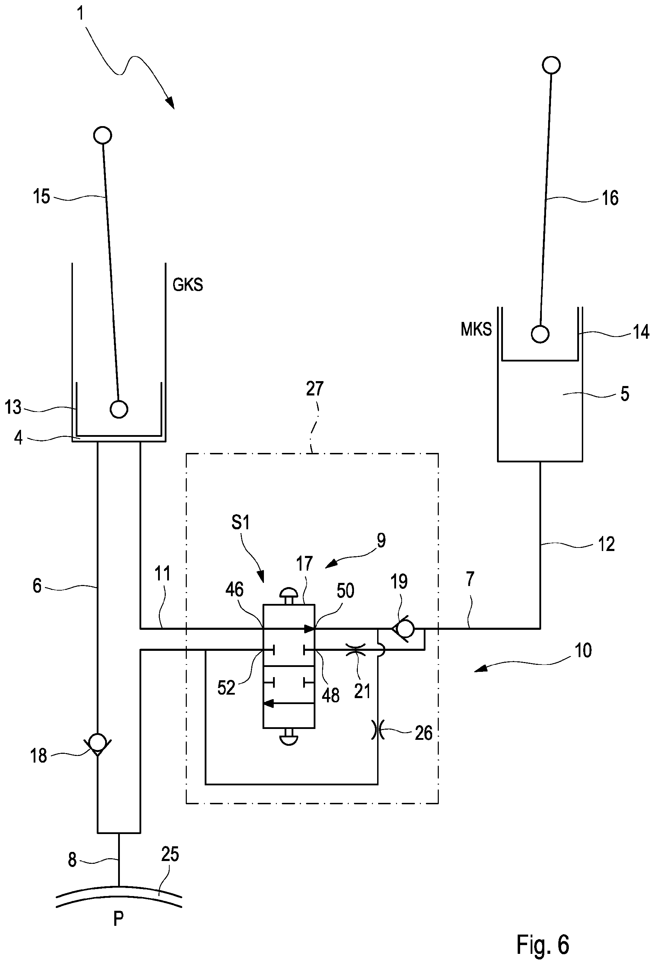

In Figur 5 ist eine Hydraulikanordnung 10 nach einem weiteren Ausführungsbeispiel der Erfindung in der zweiten Schaltstellung S2 und in Figur 6 in der ersten Schaltstellung S1 dargestellt. Die Zylinder 4, 5 weisen, wie im ersten Ausführungsbeispiel in den Figuren 1 und 2, unterschiedliche Verstellvolumina der GKS-Kammer 4 und der MKS-Kammer 5 auf. Das Umschaltventil 9, die Drosselstellen 21, 26 sowie das Rückschlagventil 19 der MKS-Kammer 5 sind jedoch bei diesem Ausführungsbeispiel in einem abgeschlossenen und separaten Hydraulikmodul 27 integriert. Das Hydraulikmodul 27 kann in einfacher Weise in das Pleuel 1 montiert werden, so dass auch die Bearbeitung des Pleuels 1 vereinfacht werden kann. Wahlweise kann auch nur das Umschaltventil 9, die Drosselstellen 21, 26 und/oder wenigstens eines der Rückschlagventile 18, 19 in dem abgeschlossenen Hydraulikmodul 27 integriert sein.

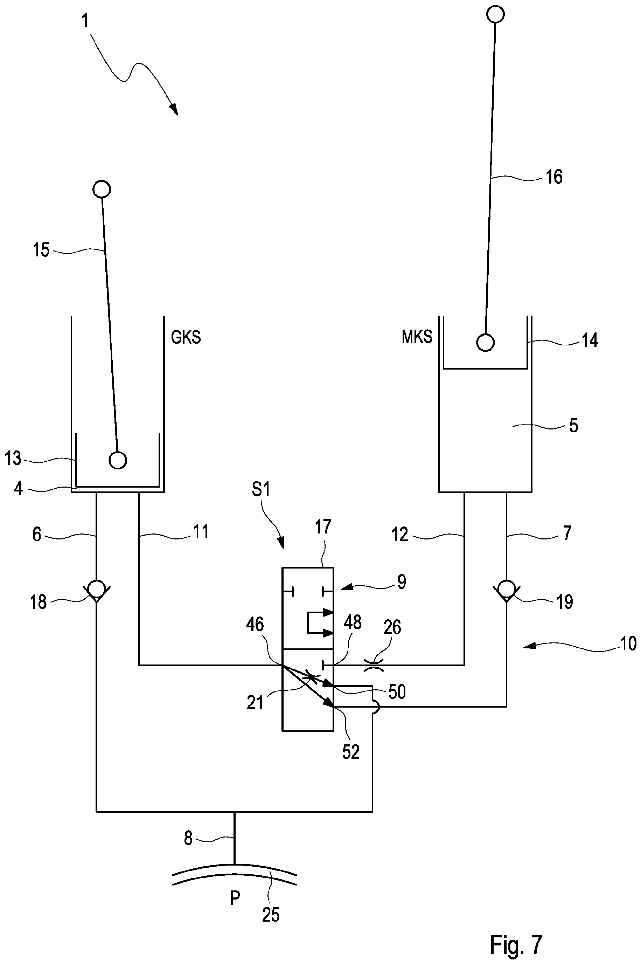

Figur 7 zeigt eine Hydraulikanordnung 10 nach einem weiteren Ausführungsbeispiel der Erfindung in der ersten Schaltstellung S1 für eine Stellung niedriger Verdichtung ε_{low}. Bei diesem Ausführungsbeispiel ist eine der Drosselstellen 21 in das Abgriffselement 17 des Umschaltventils 9 integriert. Der Ablauf 11 der GKS-Kammer 4 mündet in den ersten Arbeitsanschluss 46 des Abgriffselements 17, von dem in der ersten Schaltstellung S1 die Hydraulikflüssigkeit über das Rückschlagventil 19 in die MKS-Kammer 5 und über die Drosselstelle 21 in die Lagerschale 25 geleitet wird. Der Ablauf 12 der MKS-Kammer 5 ist durch das Abgriffselement 17 gesperrt.

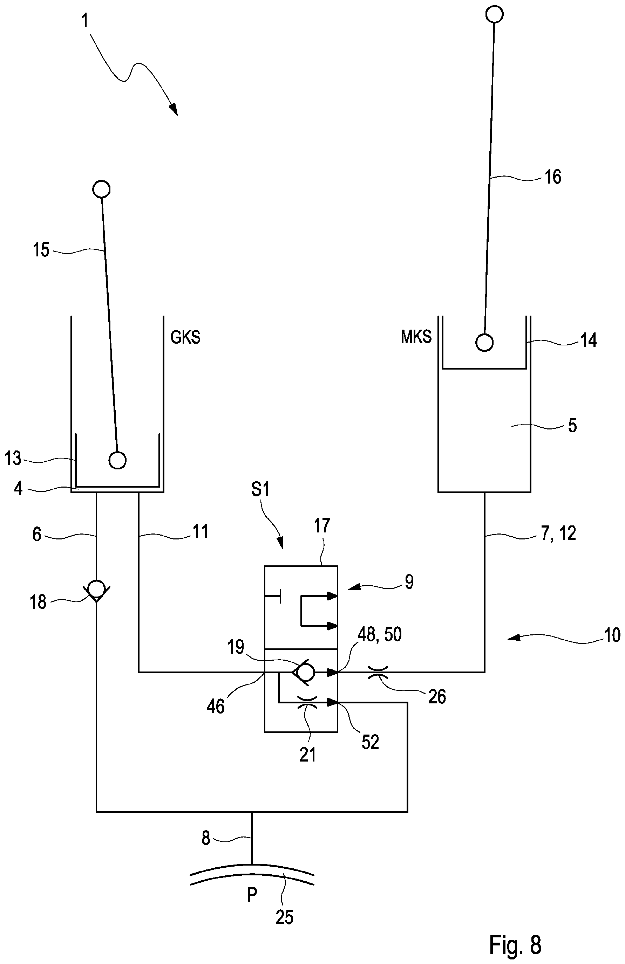

Figur 8 zeigt eine Hydraulikanordnung 10 nach einem weiteren Ausführungsbeispiel der Erfindung in der ersten Schaltstellung S1 für eine Stellung niedriger Verdichtung ε_{low}, bei der eines der Rückschlagventile 19 und eine der Drosselstellen 21 in das Abgriffselement 17 des Umschaltventils 9 integriert sind. Auch bei diesem Ausführungsbeispiel mündet der Ablauf 11 der GKS-Kammer 4 in den ersten Arbeitsanschluss 46 des Abgriffselement 17, von dem in der ersten Schaltstellung S1 die Hydraulikflüssigkeit über das Rückschlagventil 19 in die MKS-Kammer 5 und über die Drosselstelle 21 in die Lagerschale 25 geleitet wird. Zulauf 7 und Ablauf 12 sind als eine einzige Hydraulikleitung in die MKS-Kammer geführt, so dass das Befüllen der MKS-Kammer auf jeden Fall über die Drosselstelle 26 erfolgt. Zweiter Arbeitsanschluss 48 und erster Versorgungsanschluss 50 sind dabei zusammengelegt.

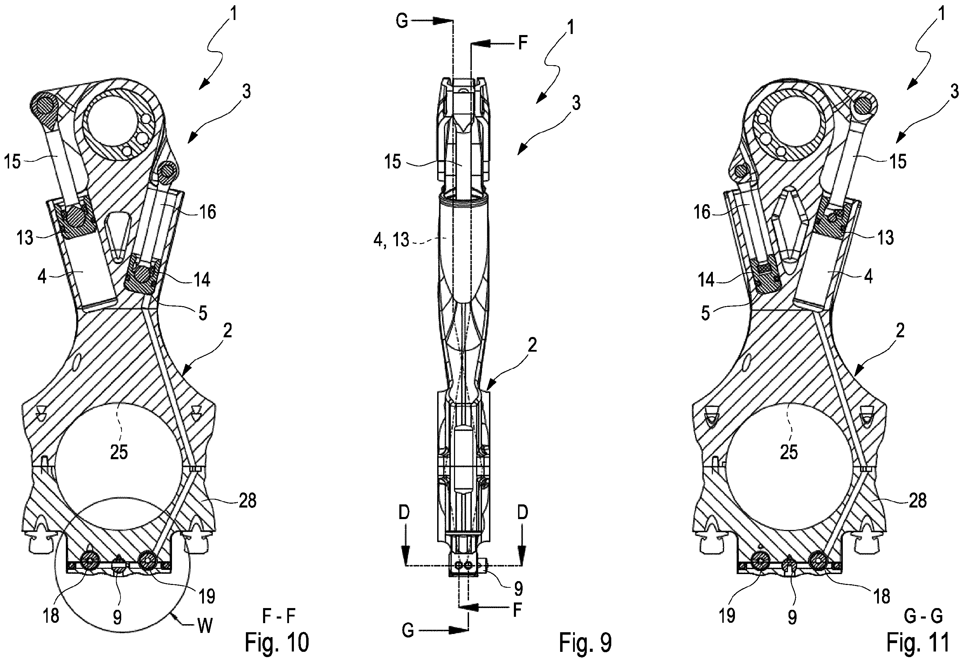

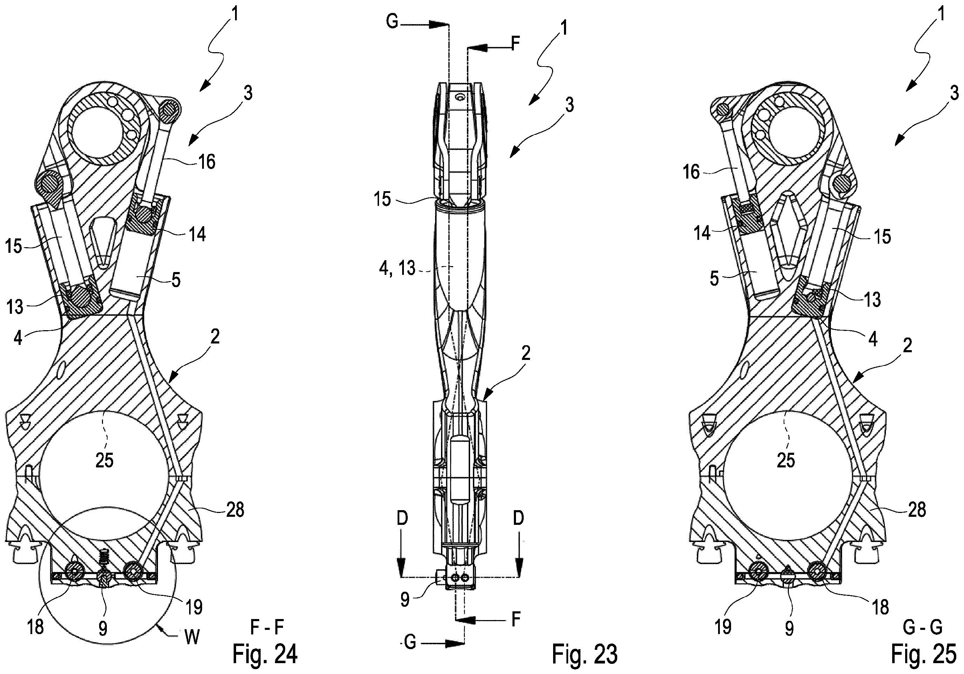

Den Figuren 9 bis 36 sind konkrete Ausführungsformen des erfindungsgemäßen Pleuels 1 mit einem entsprechenden Umschaltventil 9 zu entnehmen. Die Figuren 9 bis 22 zeigen das Pleuel 1 und das Umschaltventil 9 in der Stellung hoher Verdichtung ε_{high}, die Figuren 23 bis 36 in der Stellung niedriger Verdichtung ε_{low}.

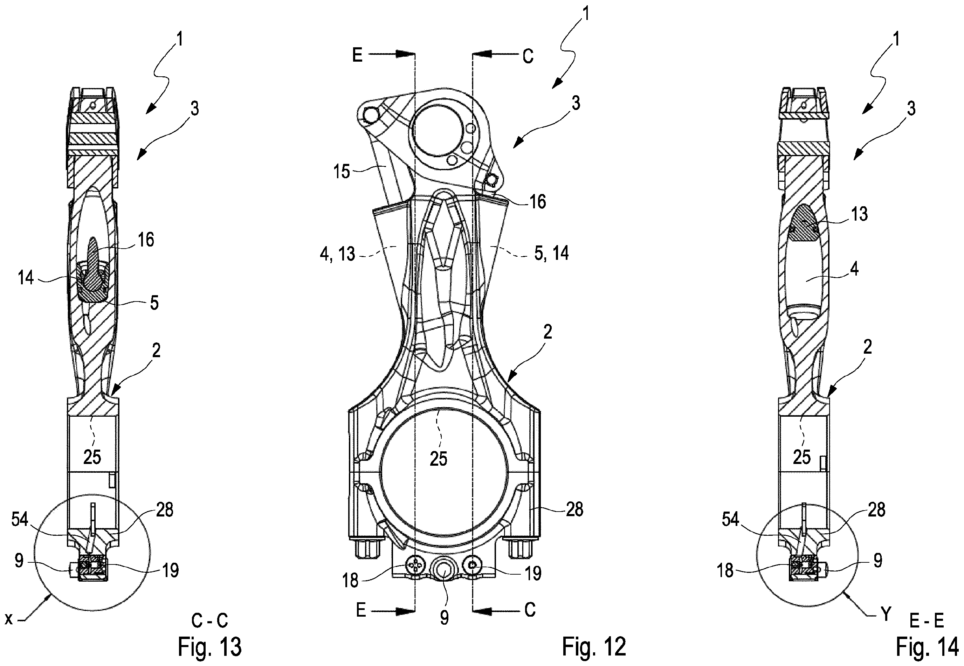

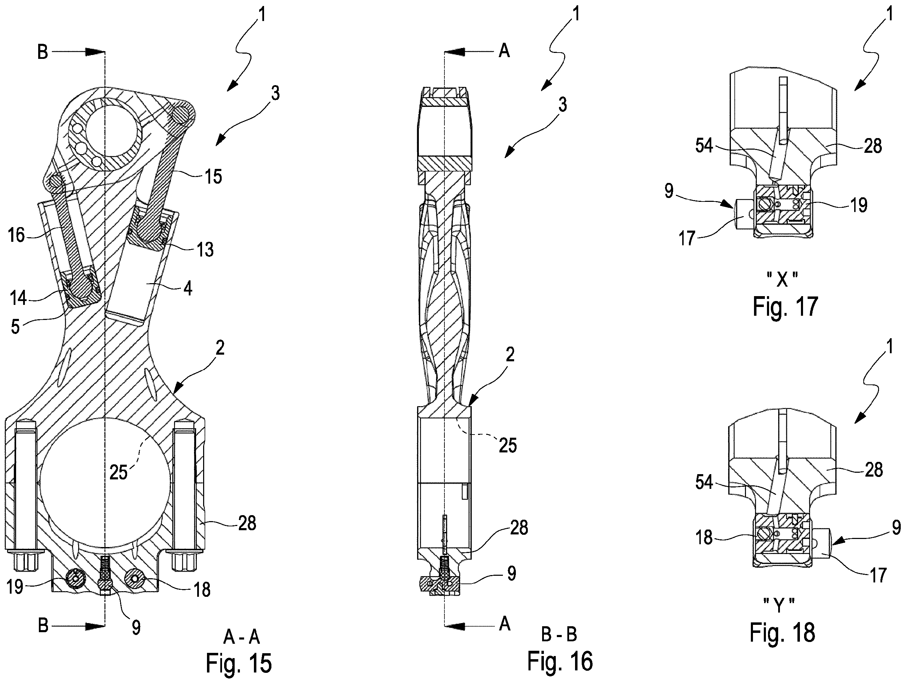

Figur 9 zeigt ein erfindungsgemäßes Pleuel 1 in der Stellung für hohe Verdichtung ε_{high} in einer Seitenansicht mit eingezeichneten Schnittebenen D-D, F-F und G-G. Die beiden Längsschnitte F-F und G-G sind in den Figuren 10, bzw. 11 dargestellt. Figur 12 zeigt das Pleuel 1 in einer Vorderansicht mit eingezeichneten Schnittebenen C-C und E-E, welche in den Figuren 13, bzw. 14 dargestellt sind. Die Figuren 15 und 16 zeigen weitere Längsschnitte A-A, bzw. B-B.

Das Pleuel 1 für eine Brennkraftmaschine mit variabler Verdichtung weist einen Pleuelkörper 2 und eine Exzenter-Verstelleinrichtung 3 zur Verstellung einer effektiven Pleuelstangenlänge mit einer der in den Figuren 1 bis 8 beschriebenen Hydraulikanordnungen 10 auf. Die Exzenter-Verstelleinrichtung 3 weist einen ersten Zylinder 4 (GKS-Kammer) und einen zweiten Zylinder 5 (MKS-Kammer) auf. Es ist sowohl jeweils ein Zulauf 6, 7 zum Zuführen von Hydraulikflüssigkeit in die Zylinder 4, 5 über eine Versorgungsleitung 8 als auch jeweils ein Ablauf 11, 12 zum Abführen von Hydraulikflüssigkeit von den Zylindern 4, 5 vorgesehen.

Die Exzenter-Verstelleinrichtung 3 kann gemäß der gezeigten, vorteilhaften Ausführungsform zwei Zylinder 4, 5 mit jeweils einem Kolben 13, 14 aufweisen, der in einer Zylinderbohrung verschiebbar geführt und mit einer Stützstange 15, 16 verbunden ist.

Das Pleuel 1 umfasst ein Umschaltventil 9, das einen beweglichen Kolben 17, insbesondere ein Abgriffselement, aufweist, welches wahlweise in eine erste Schaltstellung S1 oder eine zweite Schaltstellung S2 verlagerbar ist. Dabei ist in der ersten Schaltstellung S1 der Ablauf 11 des ersten Zylinders 4 und in der zweiten Schaltstellung S2 der Ablauf 12 des zweiten Zylinders 5 mit der Versorgungsleitung 8 verbunden. Den Zylindern 4, 5 ist jeweils ein Rückschlagventil 18, 19 zugeordnet, welches ein Zuführen von Hydraulikflüssigkeit in die Zylinder 4, 5 ermöglicht und ein Abführen von Hydraulikflüssigkeit von den Zylindern 4, 5 verhindert. Die Zylinder 4, 5 sind derart verbunden, dass in der ersten Schaltstellung S1 Hydraulikflüssigkeit aus dem ersten Zylinder 4 in den zweiten Zylinder 5 leitbar ist.

Wie beispielsweise in den Figuren 10 und 11 zu erkennen ist, sind das Umschaltventil 9 sowie die beiden Rückschlagventile 18, 19 im Pleueldeckel 28 unterhalb der Lagerschale 25 angeordnet und mit Hydraulikleitungen mit den Zylindern 4, 5 und der Hydraulikversorgung über die Lagerschale 25 verbunden. Das Umschaltventil 9 kann jedoch prinzipiell an jeder beliebigen Stelle im Pleuel 1 angeordnet sein.

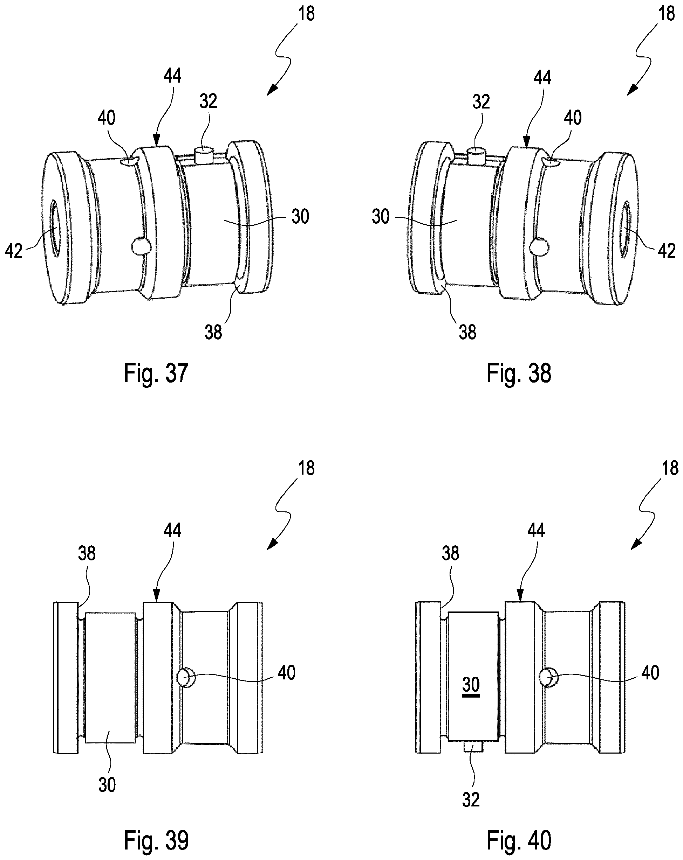

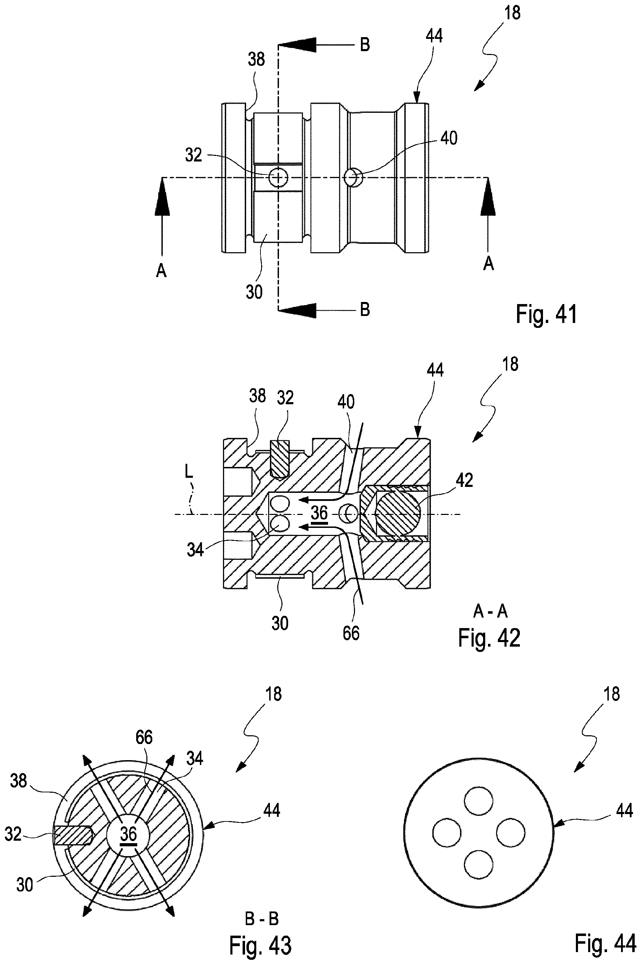

Die Figuren 17 und 18 zeigen in den vergrößerten Ausschnitten X und Y des Pleuels 1 in den Figuren 13, bzw. 14 Längsschnitte durch die beiden Rückschlagventile 19, 18. Hinter den Rückschlagventilen 18, 19 ist jeweils das Abgriffselement 17 des Umschaltventils 9 zu erkennen, das aus dem Pleueldeckel 28 herausragt. Im Schnitt ist jeweils eine angeschnittene Hydraulikleitung 54 zu erkennen, welche der Zuleitung oder Ableitung von Hydraulikflüssigkeit zu dem Rückschlagventil 18, 19 dient. Wenigstens eines der Rückschlagventile 18, 19, welches detailliert in den Figuren 37 bis 44 dargestellt ist, kann vorteilhaft wenigstens ein Schließelement 30 (siehe Figur 42) aufweisen, welches als elastisches Ringband ausgebildet ist und einen Ventilkörper 44 wenigstens teilweise auf seinem Umfang umschließt.

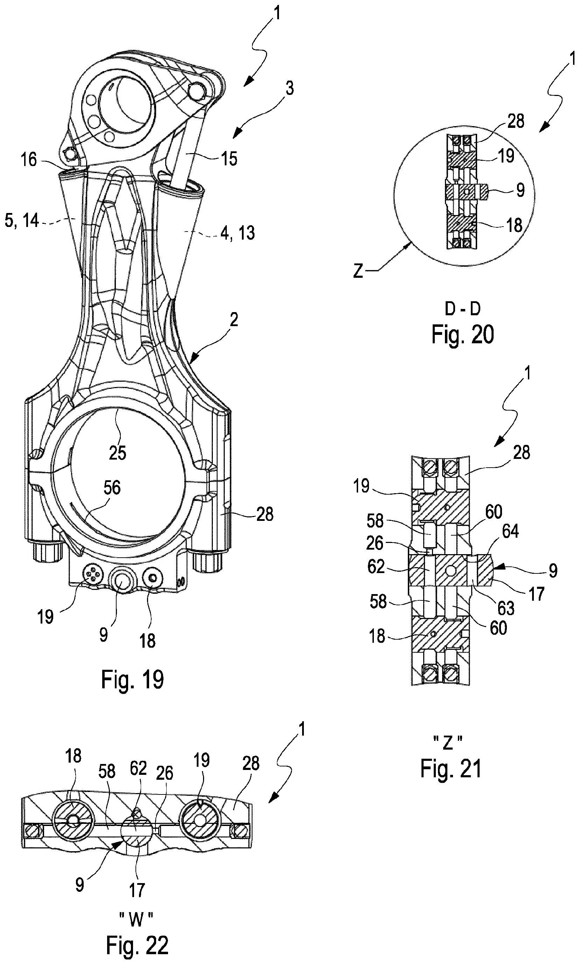

Figur 19 zeigt das Pleuel 1 nach Figur 9 in isometrischer Ansicht. Dabei ist innerhalb der Lagerschale 25 im Bereich des Pleueldeckels 28 eine Nut 56 auf dem inneren Umfang der Lagerschale 25 zu erkennen, welche für die hydraulische Versorgung der Exzenter-Verstelleinrichtung 3 über die Rückschlagventile 18, 19 und/oder das Umschaltventil 9 vorgesehen ist.

Figur 20 zeigt das Pleuel 1 in einem Querschnitt D-D in Figur 9 mit eingezeichnetem vergrößertem Ausschnitt Z, welcher in Figur 21 dargestellt ist.

In dem Querschnitt in Figur 21 sind Hydraulikleitungen 58, 60 zu erkennen, welche durch die Rückschlagventile 18, 19, bzw. das Umschaltventil 9 miteinander verbunden und/oder durchgeschaltet werden können. Dazu weist das im Ventilkörper 64 geführte Abgriffselement 17 Querbohrungen 62, 63 auf, welche je nach Schaltstellung S1, S2 einen Durchgang der Hydraulikleitungen 58, 60 bewirken können. Das Abgriffselement 17 kann zur Realisierung der Schaltstellungen S1, S2 in seiner Längsachse in dem Ventilkörper 64 verschoben werden. In der Stellung hoher Verdichtung ε_{high} ist die Hydraulikleitung 58 mittels der Bohrung 62 des Abgriffselements 17 durchgeschaltet, während die Hydraulikleitung 60 gesperrt ist. Figur 22 zeigt dazu in dem vergrößerten Ausschnitt W des Pleuels in Figur 10 einen Längsschnitt, bei dem die Bohrung 62 in dem Abgriffselement 17 zu erkennen ist, welche einen Durchgang für die Hydraulikleitung 58 darstellt.

In den Figuren 21 und 22 ist auch die Realisierung der Drosselstelle 26 als Engstelle in der Hydraulikleitung 58 zu erkennen.

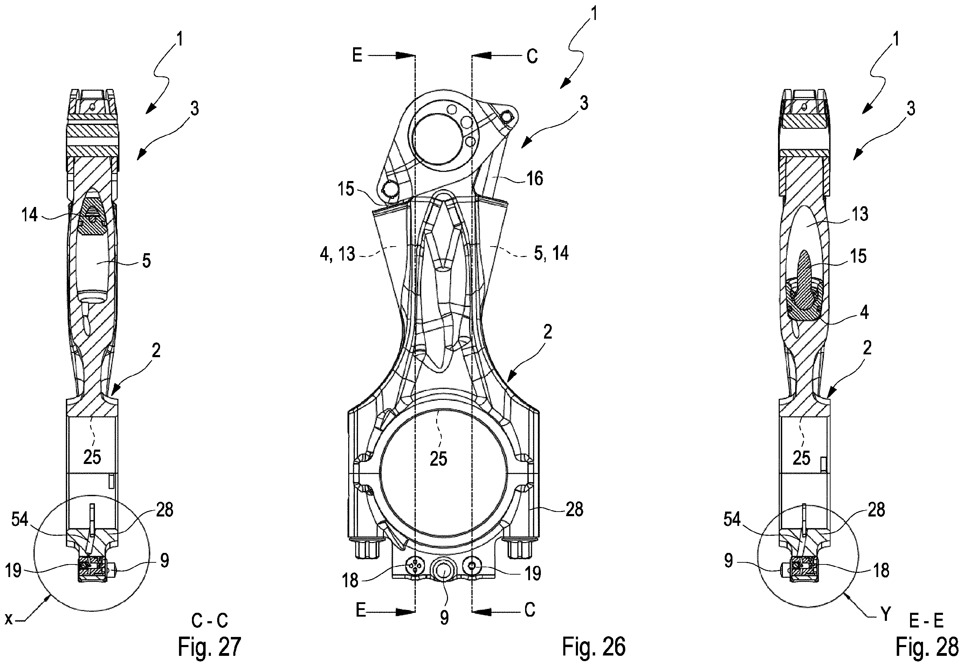

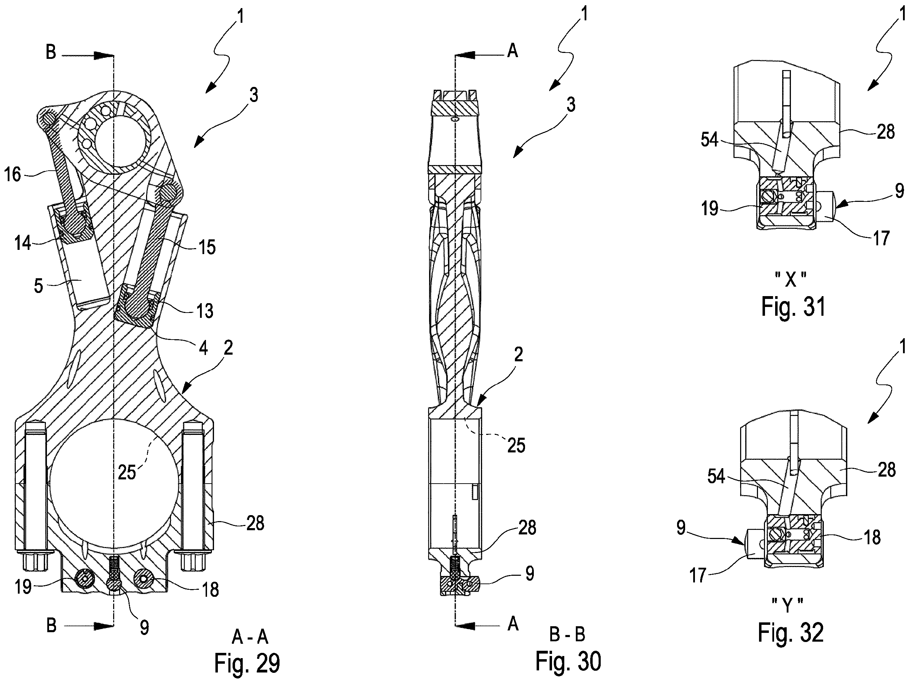

Figur 23 zeigt das erfindungsgemäße Pleuel 1 in einer Stellung für niedrige Verdichtung ε_{low} in einer Seitenansicht mit eingezeichneten Schnittebenen D-D, F-F und G-G. Die beiden Längsschnitte F-F und G-G sind in den Figuren 24, bzw. 25 dargestellt. Figur 26 zeigt das Pleuel 1 in einer Vorderansicht mit eingezeichneten Schnittebenen C-C und E-E, welche in den Figuren 27, bzw. 28 dargestellt sind. Die Figuren 29 und 30 zeigen weitere Längsschnitte A-A, bzw. B-B.

Die Figuren 31 und 32 zeigen in den vergrößerten Ausschnitten X und Y des Pleuels 1 in den Figuren 13, bzw. 14 die entsprechenden Längsschnitte durch die beiden Rückschlagventile 19, 18.

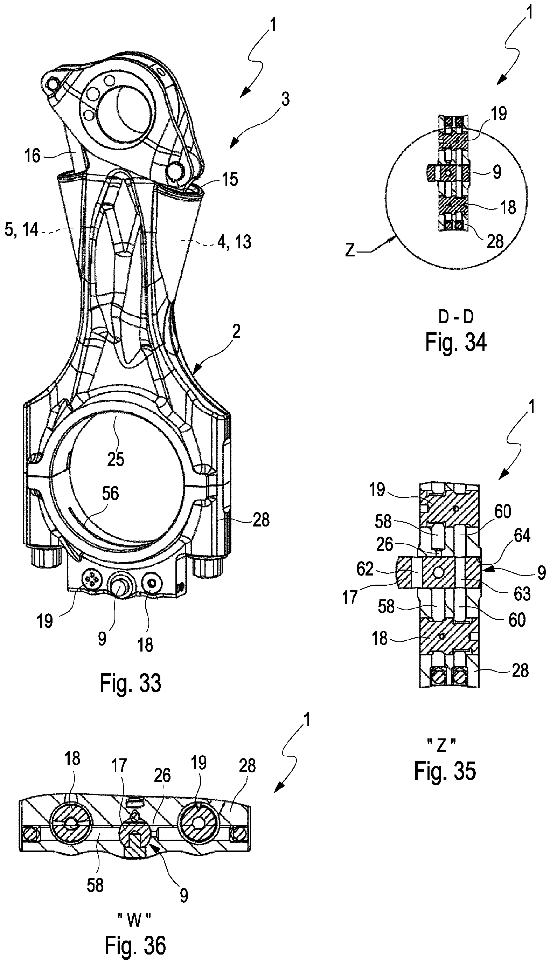

In Figur 33 ist das Pleuel 1 in isometrischer Ansicht dargestellt. Figur 34 zeigt das Pleuel 1 in einem Querschnitt D-D in Figur 23 mit eingezeichnetem vergrößertem Ausschnitt Z, welcher in Figur 35 dargestellt ist. In dieser Stellung niedriger Verdichtung ε_{low} ist mittels der Bohrung 63 des Abgriffselements 17 die Hydraulikleitung 60 durchgeschaltet, während die Hydraulikleitung 58 gesperrt ist.

Figur 36 zeigt dazu in dem vergrößerten Ausschnitt W des Pleuels in Figur 24 einen Längsschnitt, bei dem zu erkennen ist, dass die Hydraulikleitung 58 durch das Abgriffselement 17 gesperrt ist.

Den Figuren 37 bis 44 ist ein Rückschlagventil 18 in verschiedenen Ansichten und Schnitten zu entnehmen. Figur 37 zeigt das Rückschlagventil 18 in isometrischer Darstellung, während in Figur 38 das Rückschlagventil 18 in um 90° um eine Längsachse L gedrehter isometrischer Darstellung, in Figur 39 in einer Seitenansicht, sowie in Figur 40 in um 90° um die Längsachse L gedrehter Seitenansicht zu sehen ist. Figur 41 zeigt das Rückschlagventil 18 in um 180° um die Längsachse L gedrehter Seitenansicht mit eingezeichneten Schnittebenen A-A und B-B, deren Längsschnitte A-A in Figur 42 sowie B-B in Figur 43 dargestellt sind. Figur 44 zeigt eine Draufsicht des Rückschlagventils 18.

Das Rückschlagventil 18 weist einen Ventilkörper 44 mit einem Fluidpfad 66 auf, welcher durch Pfeile in dem Längsschnitt A-A gemäß den Figuren 42, 43 angedeutet ist. Hydraulikflüssigkeit tritt durch radiale Bohrungen 40 in eine zentrale Bohrung 36 im Inneren des Ventilkörpers 44 ein und kann durch weitere radiale Bohrungen 34 den Ventilkörper 44 wieder verlassen. Die Bohrungen 34 sind mittels des Schließelements 30 öffenbar und schließbar. Wie ersichtlich ist das Schließelement 30 als Ringband vorgesehen, welches ein oder mehrere Bohrungen 34 im Ventilkörper 44 verschließt und welches den Ventilkörper 44 wenigstens teilweise auf seinem Umfang umschließt. Das Ringband kann beispielsweise als elastisches Blechband realisiert sein. Bei einem durch das Ringband vorgegebenen Druck öffnet sich das Ringband nach radial außen und erlaubt den Hydraulikfluss in die nicht gezeigte Hydraulikleitung des Pleuels 1. Die zentrale Bohrung 36 ist mit einem Verschlussstopfen 42 verschlossen.

Enden des Ringbandes überlappen sich in dem Ausführungsbeispiel nicht. Daher ist zur Lagesicherung des Ringbandes ein Bolzen 32 vorgesehen, welcher zwischen den beiden Enden des Ringstoßes des Ringbandes angeordnet ist, so dass ein Verdrehen des Ringbandes zuverlässig ausgeschlossen werden kann. Eine axiale Lagesicherung des Ringbandes erfolgt durch einen umlaufenden Absatz einer Nut 38 des Ventilkörpers 44, in welcher das Ringband angeordnet ist.

Der Ventilgehäuse 44 kann beispielsweise in den Pleuelkörper 2 und/oder Pleueldeckel 28 des Pleuels 1 eingepresst werden. Alternativ kann auch eine Verschraubung mit dem Pleuelkörper 2 und/oder Pleueldeckel 28 vorgesehen sein.

## Patentansprüche

1. Pleuel (1) für eine Brennkraftmaschine mit variabler Verdichtung mit einer Exzenter-Verstelleinrichtung (3) zur Verstellung einer effektiven Pleuelstangenlänge mit einer Hydraulikanordnung (10) mit einem Umschaltventil (9) zum Steuern eines Hydraulikflüssigkeitsstroms,
wobei die Exzenter-Verstelleinrichtung (3) wenigstens einen ersten Zylinder (4) und einen zweiten Zylinder (5) aufweist und wobei sowohl jeweils ein Zulauf (6, 7) zum Zuführen von Hydraulikflüssigkeit in die Zylinder (4, 5) über eine Versorgungsleitung (8) als auch jeweils ein Ablauf (11, 12) zum Abführen von Hydraulikflüssigkeit von den Zylindern (4, 5) vorgesehen sind,
wobei das Umschaltventil (9) einen Ventilkörper und einen beweglichen Kolben (17) aufweist, welcher wahlweise in eine erste Schaltstellung (S1) oder eine zweite Schaltstellung (S2) verlagerbar ist, wobei in der ersten Schaltstellung (S1) der Ablauf (11) des ersten Zylinders (4) und in der zweiten Schaltstellung (S2) der Ablauf (12) des zweiten Zylinders (5) mit der Versorgungsleitung (8) verbunden ist, wobei den Zylindern (4, 5) jeweils ein Rückschlagventil (18, 19) zugeordnet ist, welches ein Zuführen von Hydraulikflüssigkeit in die Zylinder (4, 5) ermöglicht und ein Abführen von Hydraulikflüssigkeit von den Zylindern (4, 5) verhindert, wobei die Zylinder (4, 5) derart verbunden sind, dass in der ersten Schaltstellung (S1) Hydraulikflüssigkeit aus dem ersten Zylinder (4) in den zweiten Zylinder (5) leitbar ist,
**dadurch gekennzeichnet, dass**
zwischen der Versorgungsleitung (8) und dem Zulauf (7) des zweiten Zylinders (5) eine Drosselstelle (21) angeordnet ist, mittels welcher ein Druck vor dem Rückschlagventil (19) des zweiten Zylinders (5) derart entsteht, dass dieser in der ersten Schaltstellung (S1) befüllt werden kann.

2. Pleuel nach Anspruch 1, **dadurch gekennzeichnet, dass** in der zweiten Schaltstellung (S2) Hydraulikflüssigkeit aus dem zweiten Zylinder (5) in den ersten Zylinder (4) leitbar ist.

3. Pleuel nach Anspruch 1oder 2, wobei eine Hydraulikflüssigkeitsleitung zwischen einem der Arbeitsanschlüsse (46, 48) und einem der Versorgungsanschlüsse (50, 52) wenigstens ein Rückschlagventil (18, 19) und/oder wenigstens eine Drosselstelle (21, 26) aufweist.

4. Pleuel einem der vorhergehenden Ansprüche, wobei wenigstens eines der Rückschlagventile (18, 19) wenigstens ein Schließelement (30) aufweist, welches als elastisches Ringband ausgebildet ist und einen Ventilkörper (44) wenigstens teilweise auf seinem Umfang umschließt.

5. Pleuel nach einem der vorhergehenden Ansprüche, **dadurch gekennzeichnet, dass** den Zylindern (4, 5) jeweils ein einziges Rückschlagventil (18, 19) zugeordnet ist.

6. Pleuel nach einem der vorhergehenden Ansprüche, **dadurch gekennzeichnet, dass** die Drosselstelle (21) zwischen einem Verzweigungspunkt (67) des Ablaufs (11) des ersten Zylinders (4) und einer Hydraulikversorgung (P) angeordnet ist.

7. Pleuel nach einem der vorhergehenden Ansprüche, **dadurch gekennzeichnet, dass** eine Hydraulikverbindung zum Befüllen des zweiten Zylinders (5) aus dem ersten Zylinder (4) ungedrosselt ausgebildet ist.

8. Pleuel nach einem der vorhergehenden Ansprüche, **dadurch gekennzeichnet, dass** das Umschaltventil (9), die Drosselstellen (21, 26) und/oder wenigstens eines der Rückschlagventile (18, 19) in einem abgeschlossenen Hydraulikmodul (27) integriert sind.

9. Pleuel nach einem der vorhergehenden Ansprüche, **dadurch gekennzeichnet, dass** wenigstens eine der Drosselstellen (21, 26) in das Umschaltventil (9) integriert ist.

10. Pleuel nach einem der vorhergehenden Ansprüche, **dadurch gekennzeichnet, dass** wenigstens eines der Rückschlagventile (18, 19) in das Umschaltventil (9) integriert sind.

11. Pleuel nach einem der vorhergehenden Ansprüche, **dadurch gekennzeichnet, dass** Zulauf (6, 7) und Ablauf (11, 12) eines Zylinders (4, 5) jeweils in einer gemeinsamen Leitung in den Zylinder (4, 5) münden.

12. Pleuel nach einem der vorhergehenden Ansprüche, **dadurch gekennzeichnet, dass** der bewegliche Kolben (17) als Abgriffselement ausgebildet ist.

## Claims

1. Connecting rod (1) for an internal combustion engine with variable compression, with an eccentric adjusting device (3) for adjusting an effective connecting rod length with a hydraulic arrangement (10) with a switchover valve (9) for controlling a hydraulic liquid flow, the eccentric adjusting device (3) having at least a first cylinder (4) and a second cylinder (5), and both in each case one inlet (6, 7) for feeding hydraulic liquid into the cylinders (4, 5) via a supply line (8) and in each case one outlet (11, 12) for discharging hydraulic liquid from the cylinders (4, 5) being provided, the switchover valve (9) having a valve body and a movable piston (17) which can be moved selectively into a first switching position (S1) or a second switching position (S2), the outlet (11) of the first cylinder (4) being connected to the supply line (8) in the first switching position (S1), and the outlet (12) of the second cylinder (5) being connected to the supply line (8) in the second switching position (S2), the cylinders (4, 5) being assigned in each case one check valve (18, 19) which makes feeding of hydraulic liquid into the cylinders (4, 5) possible and prevents discharging of hydraulic liquid from the cylinders (4, 5), the cylinders (4, 5) being connected in such a way that hydraulic liquid can be conducted from the first cylinder (4) into the second cylinder (5) in the first switching position (S1), **characterized in that** a throttle point (21) is arranged between the supply line (8) and the inlet (7) of the second cylinder (5), by means of which throttle point (21) a pressure is produced upstream of the check valve (19) of the second cylinder (5) in such a way that the said second cylinder (5) can be filled in the first switching position (S1).

2. Connecting rod according to Claim 1, **characterized in that** hydraulic liquid can be conducted from the second cylinder (5) into the first cylinder (4) in the second switching position (S2).

3. Connecting rod according to Claim 1 or 2, a hydraulic liquid line between one of the working connectors (46, 48) and one of the supply connectors (50, 52) having at least one check valve (18, 19) and/or at least one throttle point (21, 26).

4. Connecting rod according to one of the preceding claims, at least one of the check valves (18, 19) having at least one closing element (30) which is configured as an elastic ring band and encloses a valve body (44) at least partially on its circumference.

5. Connecting rod according to one of the preceding claims, **characterized in that** the cylinders (4, 5) are assigned in each case a single check valve (18, 19).

6. Connecting rod according to one of the preceding claims, **characterized in that** the throttle point (21) is arranged between a branching point (67) of the outlet (11) of the first cylinder (4) and a hydraulic supply (P).

7. Connecting rod according to one of the preceding claims, **characterized in that** a hydraulic connection for filling the second cylinder (5) from the first cylinder (4) is of unthrottled configuration.

8. Connecting rod according to one of the preceding claims, **characterized in that** the switchover valve (9), the throttle points (21, 26) and/or at least one of the check valves (18, 19) are/is integrated in a closed hydraulic module (27).

9. Connecting rod according to one of the preceding claims, **characterized in that** at least one of the throttle points (21, 26) is integrated into the switchover valve (9).

10. Connecting rod according to one of the preceding claims, **characterized in that** at least one of the check valves (18, 19) is integrated into the switchover valve (9) .

11. Connecting rod according to one of the preceding claims, **characterized in that** the inlet (6, 7) and the outlet (11, 12) of a cylinder (4, 5) open in each case into the cylinder (4, 5) in a common line.

12. Connecting rod according to one of the preceding claims, **characterized in that** the movable piston (17) is configured as a tapping element.

## Revendications

1. Embiellage (1) pour un moteur à combustion interne à compression variable avec un dispositif de réglage à excentrique (3) pour le réglage d'une longueur de bielle effective avec un agencement hydraulique (10) avec une soupape de commutation (9) pour commander un courant de liquide hydraulique,
le dispositif de réglage à excentrique (3) présentant au moins un premier cylindre (4) et un deuxième cylindre (5) et à chaque fois, une alimentation (6, 7) pour introduire du liquide hydraulique dans les cylindres (4, 5) par le biais d'une conduite d'alimentation (8) ainsi qu'à chaque fois une sortie (11, 12) pour évacuer du liquide hydraulique hors des cylindres (4, 5) étant prévues,
la soupape de commutation (9) présentant un corps de soupape et un piston déplaçable (17) qui peut être déplacé de manière sélective dans une première position de commutation (S1) ou dans une deuxième position de commutation (S2), la sortie (11) du premier cylindre (4) dans la première position de commutation (S1) et la sortie (12) du deuxième cylindre (5) dans la deuxième position de commutation (S2) étant connectées à la conduite d'alimentation (8), à chaque fois un clapet antiretour (18, 19) étant associé aux cylindres (4, 5), lequel permet une alimentation de liquide hydraulique dans les cylindres (4, 5) et empêche une évacuation de liquide hydraulique hors des cylindres (4, 5), les cylindres (4, 5) étant connectés de telle sorte que dans la première position de commutation (S1), du liquide hydraulique puisse être guidé hors du premier cylindre (4) dans le deuxième cylindre (5), **caractérisé en ce que**
entre la conduite d'alimentation (8) et l'alimentation (7) du deuxième cylindre (5) est disposée une zone d'étranglement (21) au moyen de laquelle une pression s'établit avant le clapet antiretour (19) du deuxième cylindre (5) de telle sorte que celui-ci puisse être rempli dans la première position de commutation (S1).

2. Embiellage selon la revendication 1, **caractérisé en ce que** dans la deuxième position de commutation (S2), du liquide hydraulique peut être guidé hors du deuxième cylindre (5) dans le premier cylindre (4) .

3. Embiellage selon la revendication 1 ou 2, dans lequel une conduite de liquide hydraulique entre l'un des raccords de travail (46, 48) et l'un des raccords d'alimentation (50, 52) présente au moins un clapet antiretour (18, 19) et/ou au moins une zone d'étranglement (21, 26).

4. Embiellage selon l'une quelconque des revendications précédentes, dans lequel au moins l'un des clapets antiretour (18, 19) présente au moins un élément de fermeture (30) qui est réalisé sous forme de bande annulaire élastique et qui entoure un corps de soupape (44) au moins en partie sur sa périphérie.

5. Embiellage selon l'une quelconque des revendications précédentes, **caractérisé en ce qu'**à chaque fois un clapet antiretour unique (18, 19) est associé aux cylindres (4, 5).

6. Embiellage selon l'une quelconque des revendications précédentes, **caractérisé en ce que** la zone d'étranglement (21) est disposée entre un point de branchement (67) de la sortie (11) du premier cylindre (4) et une alimentation hydraulique (P).

7. Embiellage selon l'une quelconque des revendications précédentes, **caractérisé en ce qu'**une liaison hydraulique pour le remplissage du deuxième cylindre (5) à partir du premier cylindre (4) est réalisée sous forme non étranglée.

8. Embiellage selon l'une quelconque des revendications précédentes, **caractérisé en ce que** la soupape de commutation (9), les zones d'étranglement (21, 26) et/ou au moins l'un des clapets antiretour (18, 19) sont intégrés dans un module hydraulique fermé (27).

9. Embiellage selon l'une quelconque des revendications précédentes, **caractérisé en ce qu'**au moins l'une des zones d'étranglement (21, 26) est intégrée dans la soupape de commutation (9) .

10. Embiellage selon l'une quelconque des revendications précédentes, **caractérisé en ce qu'**au moins l'un des clapets antiretour (18, 19) est intégré dans la soupape de commutation (9).

11. Embiellage selon l'une quelconque des revendications précédentes, **caractérisé en ce que** l'alimentation (6, 7) et la sortie (11, 12) d'un cylindre (4, 5) débouchent à chaque fois dans une conduite commune dans les cylindres (4, 5).

12. Embiellage selon l'une quelconque des revendications précédentes, **caractérisé en ce que** le piston déplaçable (17) est réalisé sous forme d'élément de prise.
